(19) Europäisches Patentamt
European Patent Office
Office européen des brevets

(11) EP 1 868 044 A1

(12) **EUROPEAN PATENT APPLICATION**
published in accordance with Art. 158(3) EPC

(43) Date of publication:
**19.12.2007 Bulletin 2007/51**

(21) Application number: **06712865.2**

(22) Date of filing: **02.02.2006**

(51) Int Cl.:
***G03H 1/02*** *(2006.01)*

(86) International application number:
**PCT/JP2006/301722**

(87) International publication number:
**WO 2006/112106 (26.10.2006 Gazette 2006/43)**

(84) Designated Contracting States:
**DE FR GB**

(30) Priority: **30.03.2005 JP 2005099264**

(71) Applicant: **FUJIFILM CORPORATION**
**Minato-ku**
**Tokyo 106-8620 (JP)**

(72) Inventors:
- **KAMADA, Kou**
**Kanagawa 258-8577 (JP)**
- **AMIMORI, Ichiro**
**Kanagawa 250-0193 (JP)**
- **ICHIHASHI, Mitsuyoshi**
**Kanagawa 250-0193 (JP)**
- **SASAKI, Toshio**
**Kanagawa 258-8577 (JP)**

(74) Representative: **HOFFMANN EITLE**
**Patent- und Rechtsanwälte**
**Arabellastrasse 4**
**81925 München (DE)**

(54) **FILTER FOR OPTICAL RECORDING MEDIUM, OPTICAL RECORDING MEDIUM, METHOD FOR MANUFACTURING THE OPTICAL RECORDING MEDIUM, OPTICAL RECORDING METHOD AND OPTICAL REPRODUCING METHOD**

(57) The present invention provides a filter for optical recording medium capable of preventing diffuse reflection of an information beam and a reference beam from a reflective layer in the optical recording medium and preventing occurrence of noise without causing shift in selective reflection wavelength, and distortion in a reproduced image even when an angle of incidence is changed, and an optical recording medium capable of recording a high density image by using the filter. Specifically, the present invention relates to the optical recording medium containing a first substrate, a recording layer which records information by utilizing holography, an optical compensation layer, a filter layer, and a second substrate, in this order, and the filter layer is a cholesteric liquid crystal layer.

FIG. 7

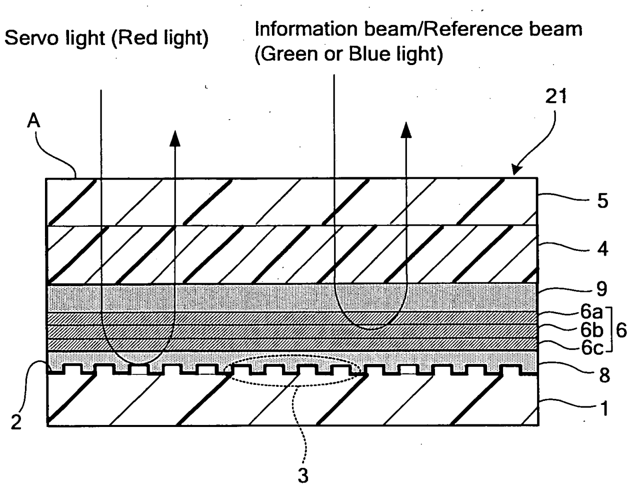




Printed by Jouve, 75001 PARIS (FR)

## Description

Technical Field

The present invention relates to a filter for an optical recording medium suitably used as a wavelength selecting reflective film in a holographic optical recording medium capable of recording unprecedentedly high density images; an optical recording medium using the filer for the optical recording medium; a method for producing the optical recording medium; and an optical recording method and optical reproducing method using the optical recording medium.

Background Art

Optical recording media are exemplified as one of recording media capable of storage of large-volume information such as high-density images. As this type of optical recording media, for example, rewritable optical recording media such as optical magnetic discs and phase change optical discs, and write-once-read-many optical recording media such as CD-R have been put in practical use, however, demands for further increasing the storage capacity of optical recording media are going on increasing. However, all of the conventionally proposed optical recording media are based on two dimensional recording, limiting a further increase in their storage capacity. Thus, in recent years, holographic optical recording media capable of recording information in a three dimensional manner are attracting a lot of attention.

In the holographic optical recording medium, information is recorded generally by superimposing an information beam to which a two dimensional intensity distribution has been given on a reference beam having almost the same intensity as the information beam inside a photosensitive recording layer and producing a distribution of optical properties such as a refractive index inside the recording layer by utilizing an interference pattern formed by the beams. Meanwhile, when the written information is read out (reproduced), only the reference beam is applied to the recording layer in the same arrangement as when recorded, and a diffraction beam having an intensity distribution commensurate with the optical property distribution inside the recording layer is emitted from the recording layer.

In this holographic optical recording medium, the optical property distribution is formed three-dimensionally in the recording layer. Thus, it is possible to partially superimpose a region in which information has been written by one information beam on a region in which information has been written by another information beam, i.e., multiple recording is possible. When using digital volume holography, a signal to noise ratio (S/ N ratio) at one spot is extremely high. Thus, even when the S/ N ratio is slightly reduced by overwriting, the original information can be reproduced with fidelity. As a result, multiple recording can be performed several hundred times, and storage capacity of an optical recording medium can be remarkably increased (see Patent Literature 1).

As such a holographic optical recording medium, for example, as shown in FIG.1, an optical recording medium is proposed in which a surface of a second substrate 1 is provided with a servo pit pattern 3, a reflective film 2 composed of aluminum is provided on the surface of this servo pit pattern, a recording layer 4 is provided on this reflective film, and a first substrate 5 is provided on this recording layer (see Patent Literature 2).

However, in an optical recording medium 20 configured as shown in FIG. 1, a servo zone and a recording zone are separated in the plane; thus there is a problem that recording density is inconveniently reduced by half by just that much.

Thus, in an optical recording medium 20a shown in Fig. 2 (see Patent Literature 3), circularly polarized light is used as an information beam and a reference beam, a gap layer 8a for smoothening the second substrate 1, a cholesteric liquid crystal layer or a dichroic mirror layer as a filter layer 6, a quarter wave plate layer 6d are disposed between the recording layer 4 and the reflective film 2, and the recording layer and the servo layer are layered in the thickness direction. The recording density is doubled by this technique. When a cholesteric liquid crystal layer of a single layer having the same turning direction as the circularly polarized light of the information beam as the above-noted filter layer in a helical structure is used, it is possible to inexpensively mass-produce an optical recording medium that is excellent in productivity, and filtering effect at a perpendicular angle of incidence of 0° is enhanced.

However, in this proposal, when an angle of incidence is changed, shift in selective reflection wavelength is caused. When the incident light is inclined at 10° or more, the information beam and the reference beam pass through the filter layer to reach the reflective film, and are reflected to thereby cause noise. This means that the proposal cannot be used for an incident light of ± 10° or more focused by a lens in a common lens optical system in an optical recording medium. Moreover, in a laminate in which a plurality of layers are laminated, and a cholesteric liquid crystal layer in which a helical pitch changes continuously, distortion in a reproduced image caused by a negative birefringence aligned in the direction of the film surface in a liquid crystal layer through which incident light reaches a selectively reflective layer.

Meanwhile, when a film is designed for the common lens optical system using a dichroic mirror layer, multilayer deposition of 50 or more layers is required and the optical recording medium requires extremely high cost.

Therefore, a holographic optical recording medium, capable of preventing diffuse reflection of an information

beam and a reference beam from a reflective layer in the optical recording medium, and preventing occurrence of noise without causing shift in selective reflection wavelength, and distortion in a reproduced image even when an angle of incidence is changed, have not been mass-produced yet with higher efficiency and lower cost, thus it is currently desired that such optical recording media be provided promptly.

Patent Literature 1: Japanese Patent Application Laid-Open (JP-A) No. 2002-123949
Patent Literature 2: Japanese Patent Application Laid-Open (JP-A) No. 11-311936
Patent Literature 3: Japanese Patent Application Laid-Open (JP-A) No. 2004-265472

Disclosure of Invention

The task of the present invention is to solve the above-mentioned conventional problems, and to achieve the following object. It is an object of the present invention to provide a filter for optical recording medium capable of preventing diffuse reflection of an information beam and a reference beam from a reflective layer in an optical recording medium, and preventing occurrence of noise without causing shift in selective reflection wavelength, and distortion in a reproduced image, even when an angle of incidence is changed, a holographic optical recording medium capable of performing unprecedentedly high density recording, by using the filter for the optical recording medium, a method for producing the optical recording medium, efficiently, at low cost, and an optical recording method and an optical reproducing method by using the optical recording medium.

The means for solving the above-mentioned problems is as follows:

<1> An optical recording medium containing a first substrate, a recording layer which records information by utilizing holography, an optical compensation layer, a filter layer, and a second substrate, in this order.

In the optical recording medium according to <1>, by containing the first substrate, the recording layer which records information by utilizing holography, the optical compensation layer, the filter layer, and the second substrate, in this order, the shift in the selective reflection wavelength is not caused, even when an angle of incidence is changed, an information beam and a reference beam and further a reproduction beam used upon recording or reproducing do not reach a reflective film. Thus, it is possible to prevent occurrence of diffuse light caused by diffuse reflection on a reflective surface. Therefore, noise caused by the diffuse light is superimposed on a reproduced image and not detected by a CMOS sensor or on CCD, and then the reproduced image can be detected at least to such an extent that errors can be corrected. The greater amount of a noise component by diffuse light requires greater multiplicity of the hologram. That is, the greater the multiplicity is, the smaller the diffraction efficiency is, e.g., when the multiplicity is 10 or more, a diffraction efficiency from one hologram is extremely small. When diffused noise is caused, it is extremely difficult to detect a reproduced image. The present invention makes it possible to eliminate these difficulties and can realize the high density image recording which has not been achieved conventionally. Additionally, by forming the optical compensation layer on the filter layer, negative birefringence occurred in the filter layer is corrected and a reproduced image without distortion is reproduced.

<2> The optical recording medium according to <1>, wherein the optical compensation layer is a laminate containing a curable vertically-aligned liquid crystal layer disposed on a support.

<3> The optical recording medium according to any of <1> and <2>, wherein the optical compensation layer contains a birefringent polymer film which has any of surface alignment and thickness-direction alignment.

<4> The optical recording medium according to any of <1> to <3>, wherein the optical compensation layer contains birefringence slow axis in a thickness direction.

<5> The optical recording medium according to any of <1> to <4>, wherein the optical compensation layer has a thickness of 0.1μm to 100 μm.

<6> The optical recording medium according to any of <1> to <5>, wherein the optical compensation layer has a retardation (Rth) of -20 nm to -400 nm, and the retardation (Rth) is expressed by the following formula (1):

$$Rth = \{(n_x+n_y)/2-n_z\} \times d \quad \cdots\cdots\cdots\cdots \text{Equation (1)}$$

wherein $n_x$, $n_y$, and $n_z$ respectively represent refractive indices in axial directions of X, Y, and Z which are respectively mutually-perpendicular in the optical compensation layer when the normal direction (the thickness direction) of the optical compensation layer is defined as the Z-axis, and "d" represents a thickness of the optical compensation layer.

<7> The optical recording medium according to any of <1> to <6>, wherein the filter layer comprises a cholesteric liquid crystal layer, and the cholesteric liquid crystal layer comprises at least a nematic liquid crystal compound and a photoreactive chiral compound.

<8> The optical recording medium according to any of <1> to <7>, wherein the photoreactive chiral compound comprises a chiral site and a photoreactive group, and the chiral site is at least one selected from an isosorbide compound, an isomannide compound, and a binaphthal compound.

<9> The optical recording medium according to any of <1> to <8>, wherein the photoreactive group is a group which induces trans-to-cis isomerization about a carbon-carbon double bond by light irradiation.

<10> The optical recording medium according to any of <1> to <9>, wherein two or more of the cholesteric liquid crystal layers are laminated.

In the optical recording medium according to <10>, by laminating two or more cholesteric liquid crystal layers, it is possible to eliminate angle dependency of reflection of irradiation light without causing shift in selective reflection wavelength even when an angle of incidence is changed.

<11> The optical recording medium according to any of <1> to <10>, wherein each of the cholesteric liquid crystal layer has circularly-polarized-light-separating property.

<12> The optical recording medium according to any of <1> to <11>, wherein the cholesteric liquid crystal layers have the same rotation direction of the helix.

<13> The optical recording medium according to any of <1> to <12>, wherein the cholesteric liquid crystal layers have different selective reflection center wavelengths.

<14> The optical recording medium according to any of <1> to <13>, wherein the selective reflection wavelength bands of the cholesteric liquid crystal layers form a continuous selective reflection wavelength band.

In the optical recording medium according to any of <11> to<14>, each of the cholesteric liquid crystal layer has circularly-polarized-light-separating property, the same rotation direction of the helix, different selective reflection center wavelengths, and the selective reflection wavelength band therein is continuous, thus, the cholesteric liquid crystal layer can eliminate angle dependency of reflection of irradiation light, without causing shift in selective reflection wavelength even when an angle of incidence is changed, and can be suitably used as a wavelength selecting reflective film.

<15> The optical recording medium according to any of <1> to <14>, wherein a first light passes through the optical recording medium while a second light which is different from the first light is reflected.

<16> The optical recording medium according to any of <1> to <15>, wherein the first light has a wavelength of 350 nm to 600 nm, and the second light has a wavelength of 600 nm to 900 nm.

<17> The optical recording medium according to any of <1> to <16>, wherein a light reflectance at $\lambda_0$ to $\lambda_0$/cos20° is 40% or more, where $\lambda_0$ represents a wavelength of irradiation light.

<18> The optical recording medium according to any of <1> to <17>, wherein a light reflectance at $\lambda_0$ to $\lambda_0$/cos40° is 40% or more, where $\lambda_0$ represents a wavelength of irradiation light.

<19> The optical recording medium according to any of <1> to <18>, wherein the first substrate has a servo pit pattern.

<20> The optical recording medium according to <19>, wherein the servo pit pattern has a reflective film on a surface thereof.

<21> The optical recording medium according to <20>, wherein the reflective film is a metallic reflective film.

<22> The optical recording medium according to any of <1> to <21>, further containing a first gap layer for smoothening a surface of the second substrate between the filter layer and the reflective film.

In the optical recording medium according to <22>, a first gap layer is disposed between the filter layer and the reflective film, and thereby protecting the reflective film, and adjusting the size of the hologram generated in the recording layer.

<23> The optical recording medium according to any of <1> to <22>, further containing a second gap layer between the recording layer and the filter layer.

In the optical recording medium according to <23>, a point focused by the information beam and reproduction beam can be present by disposing the second gap layer. When this area is filled with photopolymer, excessive exposure takes place and thus an excess amount of monomers are consumed, leading to poor multiplexing recording performance. Thus, it is effective to provide the inert and transparent second gap layer.

<24> The optical recording medium according to any of <1> to <23>, wherein the filter layer is used as a selectively reflective film in the optical recording medium which records information by utilizing holography.

<25> A filter for use in the optical recording medium according to any one of Claim 1 to 24, containing a support; an optical compensation layer over the support; and a filter layer over the support.

<26> The filter according to Claim 25, wherein the filter is used as a selectively reflective film of the optical recording medium which records information by utilizing holography.

<27> The filter according to any of <25> to <26>, wherein information is recorded in a recording layer by means of an interference pattern which is formed by interference between an information beam and a reference beam, and the information beam and the reference beam are applied onto an optical recording medium in such a way that the optical axis of the information beam is collinear with that of the reference beam.

<28> A method for producing an optical recording medium including: disposing a cholesteric liquid crystal layer on

a second substrate to form a filter layer, and disposing an optical compensation layer on the cholesteric liquid crystal layer, wherein the optical recording medium is the optical recording medium according to any one of <1> to <24>.
In the method for producing the optical recording medium according to <28>, a cholesteric liquid crystal layer is disposed on a second substrate to form a filter layer. As a result, the optical recording medium can be efficiently mass-produced at low cost by a simple method such as coating.
<29> The method for producing the optical recording medium according to <28>, including disposing two or more cholesteric liquid crystal layers to form the filter layer.
<30> An optical recording method including applying an information beam and a reference beam onto the optical recording medium according to any of

<1> to <24> in such a way that the optical axis of the information beam is collinear with that of the reference beam, and recording information in a recording layer by means of an interference pattern, which is formed by interference between the information beam and the reference beam.
The optical recording method according to <30> including applying the information beam and the reference beam onto the optical recording medium of the present invention in such a way that the optical axis of the information beam is collinear with that of the reference beam, and recording information in the recording layer by means of an interference pattern, which is formed by interference between the information beam and the reference beam, thus, the optical recording medium can realize high density recording which has not been conventionally achieved.
<31> An optical reproducing method including applying a reference beam to an interference pattern recorded in a recording layer by the optical recording method according to 30 so as to reproduce a recorded information.
In the optical reproducing method according to <31>, high density recorded information can be reproduced by efficiently and correctly reading out the interference pattern recorded in the recording layer by the optical recording method of the present invention.
<32> The optical reproducing method according to <31>, comprising applying the reference beam to the interference pattern at the same angle as the reference beam used for recording the optical recording medium so as to reproduce the recorded information.

The present invention can solve the conventional problems and provide the filter for the optical recording medium capable of preventing diffuse reflection of the information beam and the reference beam from the reflective film in the optical recording medium, and preventing occurrence of noise without causing shift in selective reflection wavelength, and distortion in a reproduced image even when an angle of incidence is changed, a holographic optical recording medium capable of performing high density recording by using the filter for the optical recording medium, and a method for producing the optical recording medium efficiently, at low cost, and an optical recording method and an optical reproducing method by using the optical recording medium.

Brief Description of Drawings

FIG.1 is a schematic sectional view showing one example of a structure of a conventional optical recording medium.
FIG. 2 is a schematic sectional view showing one example of a structure of a optical recording medium having a conventional filter layer.
FIG. 3 is a graph showing reflection characteristics of a filter for incident light from the vertical direction (0°) relative the filter, the filter including three cholesteric liquid crystal layers laminated.
FIG. 4 is a graph showing reflection characteristics of the filter layer for incident light from an oblique direction (40°) relative to the filter layer, the filter layer including three cholesteric liquid crystal layers laminated.
FIG. 5 is a graph showing reflection characteristics of a filter for incident light from the vertical direction (0°) relative to the filter, the filter including two cholesteric liquid crystal layers laminated.
FIG. 6 is a graph showing reflection characteristics of a filter layer for incident light from an oblique direction (20°) relative to the filter layer, the filter layer including two cholesteric liquid crystal layers are laminated.
FIG. 7 is a schematic sectional view showing one example of the optical recording medium according to a first embodiment of the present invention.
FIG. 8 is a schematic sectional view showing one example of the optical recording medium according to a second embodiment of the present invention.
FIG. 9 is an illustrative view showing one example of an optical system around the optical recording medium of the present invention.
FIG. 10 is a block diagram showing one example of the entire structure of an optical recording and reproducing apparatus of the present invention.

Best Mode for Carrying Out the Invention

(Optical Recording Medium)

The optical recording medium of the present invention contains a first substrate, a recording layer which records information by utilizing holography, an optical compensation layer, a filter layer, and a second substrate in this order, and further contains other layer(s) selected as necessary.

«Optical Compensation Layer»

The optical compensation layer is a layer which corrects a slight distortion occurred in a reproduced image so as to obtain the reproduced image without distortion. The distortion is occurred in a laminate in which a plurality of layers are laminated, such as a filter layer or in a cholesteric liquid crystal layer in which a helical pitch changes continuously. The distortion is caused when an angle of incidence of incident light is changed, phase of the incident light is influenced in a liquid crystal layer or other layers through which the incident light reaches the selective reflection layer, for example, circularly polarized light is changed to elliptically polarized light, or to linearly polarized light by a negative birefringence aligned in the direction of the film surface.

<Distortion Correction>

The method for distortion correction is not particularly limited and may be appropriately selected depending on the purpose. For example, the distortion correction is carried out by forming the optical compensation layer as a layer having a birefringence slow axis in the thickness direction.

The structure of the optical compensation layer is not particularly limited and may be appropriately selected depending on the purpose. Examples thereof include a vertical alignment structure in which a laminate containing a curable vertically-aligned liquid crystal layer is disposed on the filter layer, and then disposed on a support, and a structure of disposing a birefringent polymer film having any of surface alignment and thickness-direction alignment on the filter layer.

In any of the above-mentioned structures, a slow axis which delays light phase in birefringence is formed in the thickness direction of the laminate, so as to correct the distortion occurring in the filter layer and the like. The slow axis means a direction in which the refractive index becomes maximum. The refractive index is expressed by the following equation: n=c/v, where "n" represents the refractive index, "v" represents speed of light, and "c" represents speed of light in vacuo. The size of birefringence can be detected and quantified as phase difference of light. For a unit, a value of wave phase represented by angle is generally used, for example, phase difference of one wavelength equals to 360 degree. On the other hand, phase difference is standardized by wavelength, and converted to be expressed in unit of length. For example, when the wavelength of light is 633 nm and phase difference is 15 degree at the time of measurement, the amount of birefringence is expressed by the following equation: 633 x 15/360 = 26.4(nm). In addition, the phase difference may be expressed by a retardation value which is expressed by the following equation, and the preferable retardation value is used as optical property for the distortion correction of the optical compensation layer of the present invention.

Specifically, the optical compensation layer preferably has a retardation (Rth) (retardation in the thickness direction) of -20 nm to -400 nm, and the retardation (Rth) is expressed by the following Equation (1):

$$Rth = \{(n_x + n_y)/2 - n_z\} \times d \quad \cdots\cdots\cdots\cdots \text{Equation (1)}$$

wherein $n_x$, $n_y$, and $n_z$ respectively represent refractive indices in axial directions of X, Y, and Z which are mutually-perpendicular in the optical compensation layer when the normal direction (the thickness direction) of the optical compensation layer is defined as the Z-axis, and "d" represents a thickness of the optical compensation layer. The measured wavelength of refractive index represents a value when X is 550nm.

When the retardation (Rth) is less than -400nm, it exceeds the value of the distortion correction in the thickness direction of the cholesteric liquid crystal layer in the filter layer. When the retardation (Rth) is more than -20nm, it is not the effective value in terms of the correction of distortion occurred in the filter layer.

- Vertical Alignment Form-

The form of vertical alignment is not particularly limited and may be appropriately selected depending on the

purpose. For example, the curable vertically-aligned liquid crystal layer is formed on an isotropic base film as a support, a polyvinylalcohol layer (PVA layer) is formed thereon as necessary, and then horizontal alignment ability was imparted by rubbing treatment so as to form a liquid crystal layer. In this case, an information beam is entered from the side of the isotropic base film so as to adjust the phase of incident light.

-- Curable Vertically-Aligned Liquid Crystal Layer --

The curable vertically-aligned liquid crystal layer is not particularly limited and may be appropriately selected depending on the purpose, as long as it has optical property. Examples thereof include a polymer film containing a birefringent polymer film, and a phase difference layer formed by coating or transferring low-molecular or high-molecular liquid crystal compound on a support. The phase difference layer may be a single layer or two or more thereof are laminated.

The polymer film is not particularly limited and may be appropriately selected depending on the purpose. For example, a polymer film can be easily produced by a method of stretching a polymer film in the thickness direction of the film or a method of coating and drying a vinyl carbazole-based polymer (see JP-A 2001-091746). The phase difference layer formed of the liquid crystal compound is not particularly limited and may be appropriately selected depending on the purpose. Examples thereof include a layer formed by coating a substrate with a cholesteric discotic liquid crystal compound or composition containing a chiral structural unit and immobilizing it to the substrate, with its helical axis being aligned to be substantially vertical to the substrate; and a layer formed by aligning a rod-shaped liquid crystal compound or composition having a positive refractive index anisotropy to be substantially vertical to the substrate, and immobilizing it to the substrate (see, for example, JP-A No. 06-331826 and Japanese Patent No. 2,853,064). The rod-shaped liquid crystal compound may be a low-molecular compound or a high-molecular compound. Furthermore, the second phase difference region having optical property may be composed of not only one phase difference layer but also a laminated plural phase difference layers. In addition, the second phase difference region may be constituted such that optical property is satisfied by the entire laminate consisting of the support and the phase difference layer.

Examples of the rod-shaped liquid crystal compounds include compounds taking a state of nematic liquid crystal phase, smectic liquid crystal phase and lyotropic crystal phase in the temperature range for alignment and immobilization.

Of these, preferred is a liquid crystal showing a smectic A phase or B phase in which uniform vertical alignment can be obtained without fluctuation. Particularly, in the case of the rod-shaped liquid crystal compound which yields the above-described liquid crystal state at an appropriate alignment temperature in the presence of an additive, a composition containing the additive and the rod-shaped liquid crystal compound may be preferably used to form a layer.

The curable vertically-aligned liquid crystal layer allows a liquid crystal compound molecules to be vertically stood in the curable liquid crystal layer. In order to vertically align the liquid crystal compound molecules on the alignment film side, it is important to reduce surface energy of the alignment film.

Specifically, the surface energy of the alignment film is decreased by the presence the functional groups of the polymer, whereby the liquid crystal compound molecules are made to stand up. As for the functional group which decreases the surface energy of the alignment film, a fluorine atom and hydrocarbon groups having 10 or more carbon atoms are effective. In order to cause the fluorine atom or hydrocarbon group to be present on the alignment film surface, the fluorine atom or the hydrocarbon group is preferably introduced into the side chain of the polymer rather than into the main chain. The fluorine-containing polymer preferably contains a fluorine atom in a proportion of 0.05 % by mass to 80 % by mass, more preferably 0.1 % by mass to 70 % by mass, still more preferably 0.5 % by mass to 65 % by mass, and particularly preferably 1 % by mass to 60 % by mass.

Examples of the hydrocarbon groups include aliphatic groups, aromatic groups, and the combinations thereof. The aliphatic group may be cyclic, branched or linear. The aliphatic group is preferably an alkyl group (may be a cycloalkyl group) or an alkenyl group (may be a cycloalkenyl group). The hydrocarbon group may have a substituent which does not exhibit strong hydrophilicity, such as hydrogen atom. The number of carbon atoms in the hydrocarbon group is preferably 10 to 100, more preferably 10 to 60, and particularly preferably 10 to 40. The main chain of the polymer preferably has a polyimide structure or a polyvinyl alcohol structure.

The polyimide is generally synthesized by a condensation reaction of a tetracarboxylic acid and a diamine. A polyimide corresponding to a copolymer may also be synthesized by using two or more kinds of tetracarboxylic acids or two or more kinds of diamines. The fluorine atom or the hydrocarbon group may be present in the repeating unit originated in the tetracarboxylic acid, may be present in the repeating unit originated in the diamine, or may be present in both repeating units. In the case of introducing a hydrocarbon group into a polyimide, it is particularly preferred to form a steroid structure in the main or side chain of the polyimide. The steroid structure present in the side chain corresponds to a hydrocarbon group having 10 or more carbon atoms and has a function of vertically aligning the liquid crystal compound molecules. The term "steroid structure" as used herein means a cyclopentanohydrophenanthrene ring structure or a ring structure resulting from conversion of a part of bonds in the cyclopentanohydrophenanthrene ring into a double bond within the aliphatic ring range (the range of without forming an aromatic ring).

For the means of vertically aligning the liquid crystal compound molecules, a method of mixing an organic acid in a polymer such as polyvinyl alcohol, modified polyvinyl alcohol and polyimide can be suitably used. Examples of the acids to be mixed include a carboxylic acid, a sulfonic acid and an amino acid. Out of the air-interface alignment agents described later, those showing acidity may also be used. In addition, quaternary ammonium salts can be suitably used, as well. The amount to be mixed is preferably 0.1 % by mass to 20 % by mass, and more preferably from 0.5 % by mass to 10 % by mass, based on the polymer.

The saponification degree of the polyvinyl alcohol is preferably 70 % to 100%, and more preferably 80 % to 100%. The polymerization degree of the polyvinyl alcohol is preferably 100 to 5,000.

In the case of aligning the rod-shaped liquid crystal compound, the alignment film is not particularly limited and may be appropriately selected depending on the purpose, for example, the alignment film containing a polymer having a hydrophobic group as a functional group in the side chain is preferred. The kind of the functional group is specifically determined according to the kind of the liquid crystal molecule and the required alignment state. For example, the modifying group for the modified polyvinyl alcohol can be introduced by copolymerization modification, chain transfer modification or block polymerization modification. The modifying group is not particularly limited and may be appropriately selected depending on the purpose. Examples thereof include a hydrophilic group (e.g., carboxylic acid group, sulfonic acid group, phosphonic acid group, amino group, ammonium group, amide group, thiol group), a hydrocarbon group having a carbon atoms of 10 to 100, a fluorine atom-substituted hydrocarbon group, a thioether group, a polymerizable group (e.g., unsaturated polymerizable group, epoxy group, aziridinyl group), and an alkoxysilyl group (e.g., trialkoxy, dialkoxy, monoalkoxy).

Specific examples of the modified polyvinyl alcohol compounds include those described in JP-A 2000-155216 (paragraphs [0022] to [0145]), and JP-A 2002-62426 (paragraphs [0018] to [0022]).

When the alignment film is formed by using a polymer having a side chain containing a crosslinking functional group bonded to the main chain or a polymer having a crosslinking functional group in the side chain having a function of aligning liquid crystal molecules and a polymer film is formed thereon by using a composition containing a polyfunctional monomer, the polymer in the alignment film can be copolymerized with the polyfunctional monomer in the polymer film formed thereon. As a result, covalent bonds are formed between the alignment film polymers, between the polyfunctional monomer and the alignment film polymer, as well as between the polyfunctional monomers, so that the alignment film and the polymer film can be firmly bonded.

Accordingly, by forming an alignment film using a polymer having a crosslinking functional group, the strength of the optical compensation sheet can be remarkably improved. The crosslinking functional group of the alignment film polymer preferably contains a polymerizable group, similarly to the polyfunctional monomer. Specific examples of the polymerizable group include those described in JP-A 2000-155216 (paragraphs [0080] to [0100]).

The alignment film polymer may be also crosslinked by using a crosslinking agent, separately from the crosslinking functional group. The crosslinking agent is not particularly limited and may be appropriately selected depending on the purpose. Examples of the crosslinking agents include an aldehyde, an N-methylol compound, a dioxane derivative, a compound of exerting activity resulting from activation of a carboxyl group, an active vinyl compound, an active halogen compound, an isoxazole, and a dialdehyde starch. These may be used alone or in combination of two or more. Specific examples thereof include the compounds described in JP-A 2002-62426 (paragraphs [0023] to [0024]). Of these, aldehyde having high reaction activity is preferred, and glutaraldehyde is more preferred.

The content of the crosslinking agent to be added is preferably 0.1 % by mass to 20 % by mass, and more preferably 0.5 % by mass to 15 % by mass, based on the polymer. The content of the unreacted crosslinking agent remaining in the alignment film is preferably 1.0 % by mass or less, more preferably 0.5 % by mass or less. By adjusting in this way, even when the alignment film is used in a liquid crystal display device for a long time or is left to stand in a high-temperature high-humidity atmosphere for a long time, good durability free from generation of reticulation can be achieved.

The alignment film can be formed basically by a method where a composition containing the polymer as the alignment film-forming material and a cross-linking agent is coated on a support and dried (crosslinked) by heating, and subjected to rubbing. As described above, the crosslinking reaction may be performed at an arbitrary timing after coating the composition on the support. When a water-soluble polymer such as polyvinyl alcohol is used as the alignment film-forming material, the coating solution is preferably prepared by using a mixed solvent of an organic solvent having antifoaming activity (e.g., methanol) and water. The ratio of water/methanol is, in mass ratio, preferably 0/100 to 99/1, more preferably from 0/100 to 91/9. With the ratio in this range, generation of air bubbles can be prevented and defects on the surface of the alignment film and the phase difference layer are greatly decreased.

The method for applying the alignment film is not particularly limited and may be appropriately selected depending on the purpose. Examples thereof include spin coating, dip coating, curtain coating, extrusion coating, rod coating and roll coating. Of these, rod coating is preferred. The thickness of the alignment film after dried is preferably 0.1 μm to 10 μm. The temperature of drying by heating is not particularly limited and may be appropriately selected depending on the purpose, for example, it may be performed at 20 °C to 110°C. In order to achieve satisfactory crosslinking, the drying temperature is preferably 60 °C to 100 °C, and more preferably from 80 °C to 100 °C. The drying time may be 1 minute to 36 hours, and is preferably 1 minute to 30 minutes. The pH is also preferably set to a value optimal for the crosslinking agent to be used. In the case of using glutaraldehyde, pH is preferably 4.5 to 5.5, and more preferably 5.

The alignment film is preferably disposed on the support. The alignment film is used as described above by crosslinking the polymer layer. No rubbing treatment is preferred for the vertical alignment of the rod-shaped liquid crystal compound molecules. Note that the liquid crystal compound molecules may be first aligned by means of the alignment film, and then, the aligned molecules are immobilized as they are to form a phase difference layer, and only the phase difference layer may be transferred onto the polymer film (or the support).

- Liquid Crystal Layer -

For the liquid crystal layer, the rod-shaped liquid crystal compound may be used as a compound of the second phase difference region. The rod-shaped liquid crystal compound is not particularly limited and may be appropriately selected depending on the purpose, for example, the rod-shaped liquid crystal compound expressed by the following Structural Formula (L). In addition, examples of the rod-shaped liquid crystal compounds include azomethines, azoxys, cyanobiphenyls, cyanophenyl esters, benzoic esters, cyclohexanecarboxylic acid phenyl esters, cyanophenylcyclohexanes, cyano-substituted phenylpyrimidines, alkoxy-substituted phenylpyrimidines, phenyldioxanes, tolanes, and alkenylcyclohexylbenzonitriles. Not only these low-molecular liquid crystal molecules but also high-molecular liquid crystal molecules may be used. Liquid crystal molecules having a partial structure that can undergo polymerization or crosslinking reaction upon exposure to actinic ray, electron beam or heat are suitably used. The number of such partial structures is preferably 1 to 6, and more preferably 1 to 3.

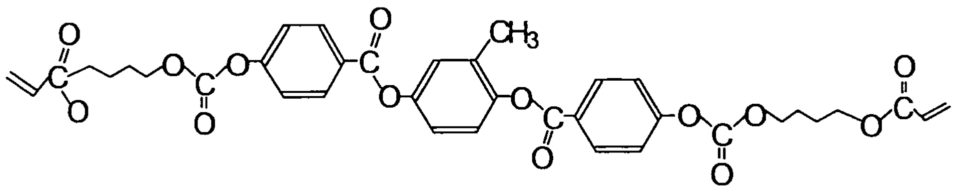

Structural Formula (L)

In the case where the second phase difference region contains a phase difference layer formed by immobilizing the rod-shaped liquid crystal compound molecules in the aligned state, the phase difference layer formed by substantially vertically aligning the rod-shaped liquid crystal compound molecules and immobilizing them in that vertically aligned state is preferably used. The term "substantially vertical" means that an angle made by the film surface and the director of the rod-shaped liquid crystal compound is in the range from 70 degree to 90 degree. Such liquid crystalline compound molecules may be obliquely aligned or may be aligned so that the tilt angle can gradually change (hybrid alignment). In either case of oblique alignment or hybrid alignment, the average tilt angle is preferably 70 degree to 90 degree, more preferably 80 degree to 90 degree, and most preferably 85 degree to 90 degree.

The phase difference layer formed from the rod-shaped liquid crystal compound can be formed by the following process: the vertical alignment film formed on the support is coated with a coating solution containing the rod-shaped liquid crystal compound and, if necessary, the following polymerizable initiator, air-interface vertically aligning agent and other additives for vertical alignment of the rod-shaped liquid crystal compound molecules, followed by their immobilization in the aligned state. When the phase difference layer is formed on a temporary support, the phase difference layer can be produced by transferring it onto the support. Furthermore, the second phase difference region having optical property may be composed of not only one phase difference layer but also a laminated plural phase difference layers. In addition, the second phase difference region may be constituted such that the optical property is satisfied by the entire laminate consisting of the support and the phase difference layer.

The solvent to be used for preparation of the coating solution is not particularly limited and may be appropriately selected depending on the purpose, and suitable examples thereof include organic solvents. Examples of the organic solvents include amides such as N,N-dimethylformamide; sulfoxides such as dimethyl sulfoxide; heterocyclic compounds such as pyridine; hydrocarbons such as benzene and hexane; alkyl halides such as chloroform and dichloromethane; esters such as methyl acetate and butyl acetate; ketones such as acetone, and methyl ethyl ketone; and ethers such as tetrahydrofuran, and 1,2-dimethoxyethane. Each of these organic solvents can be used alone or in combination of two or more. Of these, alkyl halides, and ketones are preferred.

The method for applying the coating solution is not particularly limited and may be appropriately selected depending on the purpose. Examples thereof include methods known in the art such as an extrusion coating, a direct

gravure coating, a reverse gravure coating and a die coating.

The vertically aligned liquid crystal compound is preferably fixed with maintaining the aligned state. The fixing is preferably performed by a polymerization reaction of a polymerizable group (P) introduced into the liquid crystal compound. Examples of photopolymerization reaction include a thermal polymerization reaction by using a thermal polymerization initiator, and a photopolymerization reaction by using a photopolymerization initiator. Of these, the photopolymerization reaction is preferred. The photopolymerization initiator is not particularly limited and may be appropriately selected depending on the purpose. Examples thereof include α-carbonyl compounds described in U.S. Patent Nos. 2367661 and 2367670; acyloin ethers described in U.S. Patent No. 2448828; α-hydrocarbon-substituted aromatic acyloin compounds described in U.S. Patent No. 2722512; polynuclear quinone compounds described in U.S. Patent Nos. 3046127 and 2951758; combinations of a triarylimidazole dimer and p-aminophenyl ketone described in U.S. Patent No. 3549367; acridine and phenazine compounds described in JP-A No. 60-105667 and U.S. Patent No. 4239850; and oxadiazole compounds described in U.S. Patent No. 4212970.

The content of the photopolymerization initiator is preferably 0.01 % by mass to 20 % by mass, and more preferably 0.5 % by mass to 5 % by mass, of the solid content of the coating solution.

The light irradiation for polymerizing the rod-shaped liquid crystal molecules is not particularly limited and may be appropriately selected depending on the purpose, for example, ultraviolet ray is preferably used. The irradiation energy of the light irradiation is preferably 20 $mJ/cm^2$ to 50 $mJ/cm^2$, and more preferably 100 $mJ/cm^2$ to 800 $mJ/cm^2$. In order to accelerate the photopolymerization reaction, the light irradiation may be performed under heating condition. The thickness of the first phase difference region containing the optical anisotropic layer is preferably 0.1 μm to 10 μm, more preferably 0.5 μm to 5 μm, and particularly preferably 1 μm to 5 μm.

- Air-Interface Vertically Aligning Agent -

The air-interface vertically aligning agent is a compound of controlling the liquid crystalline compound molecules to be vertically aligned on the air-interface side, and used to obtain a uniformly and vertically aligned state of the liquid crystalline compound molecules, because the liquid crystalline compound molecules usually have a property of obliquely aligning on the air-interface side. For this purpose, a phase difference layer is preferably formed by using a liquid crystal coating solution, in which a compound, which localizes on the air-interface side and exerts a function of vertically aligning the liquid crystal compound molecules by the excluded volume effect or electrostatic effect, is incorporated therein.

The air-interface vertically aligning agent is not particularly limited and may be appropriately selected depending on the purpose, for example, the air-interface vertically aligning agent expressed by the following Structural Formula (K). Additionally, examples thereof include the compounds described in JP-A Nos. 2002-20363 and 2002-129162. Also, examples thereof include the compounds described in Japanese Patent Application Nos. 2002-212100 (paragraphs [0072] to [0075]), 2002-262239 (paragraphs [0037] to [0039]), 2003-91752 (paragraphs [0071] to [0078]), 2003-119959 (paragraphs [0052] to [0054], [0065], [0066] and [0092] to [0094]), 2003-330303 (paragraphs [0028] to [0030]), and 2004-003804 (paragraphs [0087] to [0090]). By mixing these compound, the coating ability is improved and the generation of unevenness or repelling is restrained.

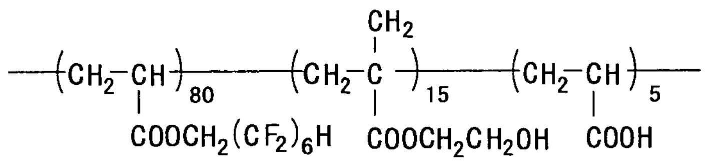

Structural Formula (K)

The content of the air-interface vertically aligning agent used in the liquid crystal coating solution is preferably 0.05 % by mass to 5 % by mass. In the case of using a fluorine-based air-interface aligning agent, the content thereof is preferably 1 % by mass or less.

- Support -

The support is not particularly limited and may be appropriately selected depending on the purpose, for example, it is preferably transparent. Specifically, the support preferably has a light transmittance of 80% or more. Additionally, the support preferably has a small wavelength dispersion, and specifically, preferably has an Re400/ Re700 ratio of less than 1.2.

The isotropic base film is not particularly limited and may be appropriately selected depending on the purpose,

for example, a polymer film, a glass plate and the like.

The production method of the isotropic base film is not particularly limited and may be appropriately selected depending on the purpose. Examples thereof include melt extrusion, solution casting, inflation, and flow casting.

The polymer film formed into the support is not particularly limited and may be appropriately selected depending on the purpose. Examples thereof include films of cellulose esters, polycarbonates, polysulfones, polyether polysulfones, polyacrylates, and polymethacrylates. Of these, the cellulose ester film is preferred, a cellulose acetate film is more preferred, and a cellulose triacetate film is particularly preferred. The polymer film is preferably formed by a solvent cast method.

The thickness of the support is not particularly limited and may be appropriately selected depending on the purpose. It is preferably 20 μm to 500 μm, and more preferably 40 μm to 200 μm. In order to improve the adhesiveness between the support and a layer disposed thereon (an adhesive layer, a vertically-aligned film or a phase difference layer), the support may be surface-treated, for example, a glow discharge treatment, a corona discharge treatment, an ultraviolet (UV) irradiation treatment or a flame treatment. An adhesive layer (undercoat layer) may be disposed on the support. For a support or a longer support, preferably used is a polymer layer which is coated on one side of the support, or is flow-cast together with the support, wherein the polymer layer contains 5% to 40% of inorganic particles having an average particle diameter of approximately 10 nm to 100 nm in solid content weight ratio, in order to give slip property for a conveying step, or prevent a back surface and front surface from adhering to each other after winded.

-- Other Materials in Phase Difference Layer --

The other materials in the phase difference layer are not particularly limited and may be appropriately selected depending on the purpose. For example, a plasticizer, a surfactant and a polymerizable monomer may be used along with the above-mentioned liquid crystal molecules, thereby improving the uniformity of the coating film, the strength of the film, and the alignment of the liquid crystal molecules in the film. These raw materials are preferably compatible with the liquid crystal compound, and do not prevent alignment of the liquid crystal compound molecules.

The polymerizable monomer is not particularly limited and may be appropriately selected depending on the purpose. Examples thereof include radical-polymerizable compound and cationic-polymerizable compounds. Of these, polyfunctional radical-polymerizable monomer is preferred. The monomer copolymerizable with the polymerizable group-containing liquid crystal compound is more preferred, for example, the polymerizable monomer described in JP-A No. 2002-296423, (paragraphs [0018] to [0020]). The content of the compound to be added may be generally 1 % by mass to 50% by mass, and ) preferably 5 % by mass to 30% by mass, on the basis of the discotic liquid crystal molecules.

The surfactant is not particularly limited and may be appropriately selected depending on the purpose, for example, any known compound. Of these, fluorine-containing compounds are preferred. Specific example include the compounds described in JP-A No. 2001-330725 (paragraphs [0028] to [0056]), and JP-A No. 2003-295212 (paragraphs [0069] to [0126]).

The polymer which is used with the liquid crystal compound can preferably thicken the coating solution. The polymer is not particularly limited and may be appropriately selected depending on the purpose, for example, cellulose ester. Examples of the cellulose ester include those described in JP-A No. 2000-155216 (paragraph [0178]). In order not to prevent alignment of the liquid crystal compound molecules, the content of the polymer to be added is preferably 0.1 % by mass to 10 % by mass, and more preferably 0.1 % by mass to 8 % by mass, on the basis of the liquid crystal molecule.

- Film having Surface Alignment and Thickness Direction Alignment -

The form of the film having surface alignment and thickness direction alignment is not particularly limited and may be appropriately selected depending on the purpose. Examples thereof include a compensation film in which a surface alignment film is formed by using a material having negative refractive index anisotropy so as to allow a refractive index ellipsoid to be stretched in the thickness direction, and a birefringent polymer film processed in a thickness direction stretching step by using a material having positive refractive index anisotropy.

The thickness of the optical compensation layer is not particularly limited and may be appropriately selected depending on the purpose, as long as the retardation (Rth) is satisfied. For example, it is preferably 0.1 μm to 100 μm, more preferably 1 μm to 100 μm, and particularly preferably 3 μm to 50 μm. When the thickness is less than 0.1 μm, negative birefringence may not be satisfactorily corrected, sometimes. When the thickness is more than 100 μm, effective recording area may be narrowed down, and recording density may be decreased.

«Filter Layer»

The filter layer is used to prevent diffuse reflection of the information beam and a reference beam from a

reflective layer in the optical recording medium, and prevent occurrence of noise, without causing shift in selective reflection wavelength and distortion in a reproduced image even when an angle of incidence is changed.

The filter layer of the present invention is a laminate in which a cholesteric liquid crystal layer, and other layers selected appropriately, as necessary, are disposed.

<Cholesteric Liquid Crystal Layer>

The cholesteric liquid crystal layer contains at least a nematic liquid crystal compound and a photoreactive chiral compound, further contains a polymerizable monomer and sill further contains other component(s) as necessary.

The cholesteric liquid crystal layer may be a single layer or two or more of the layers are laminated. The number of laminated layers is not particularly limited and may be appropriately selected depending on the purpose, for example, 2 to 10 layers are preferred. When more than 10 laminated layers are used, on the contrary, the production efficiency may be lowered and the object and effects of the present invention may not be accomplished.

As the cholesteric liquid crystal layer, those having circularly-polarized-light-separating property are preferred. The cholesteric liquid crystal layer having the circularly-polarized-light-separating property has the selective reflection property of reflecting only the light of a circularly polarized light component in which the rotation direction (clockwise or counterclockwise) of the helix in the liquid crystal is identical to a circularly polarized light direction, and the wavelength is a helical pitch of the liquid crystal. By utilizing the selective reflection property of the cholesteric liquid crystal layer, only the circularly polarized light having the specific wavelength is transmitted and separated from natural light in a certain wavelength band, and the remaining thereof is reflected.

Therefore, in the cholesteric liquid crystal layer, it is preferable that the first light is transmitted and the circularly polarized light of the second light which is different from the first light is reflected. The first light preferably has a wavelength of 350 nm to 600 nm and the second light preferably has a wavelength of 600 nm to 900 nm.

The selective reflection property of the cholesteric liquid crystal layer is limited to the specific wavelength band, and is difficult to cover a visible light region. That is, a selective reflection wavelength band width $\Delta\lambda$ in the cholesteric liquid crystal layer is represented by the following Equation 1.

< Equation 1 >

$$\Delta\lambda = 2\lambda\,(ne\text{-}no)/(ne+no):$$

wherein "no" represents a refractive index of a nematic liquid crystal molecule for normal light, contained in the cholesteric liquid crystal layer, "ne" represents the refractive index of the nematic liquid crystal molecule for abnormal light, and $\lambda$ represents a selective reflection center wavelength.

As can be seen from Equation 1, $\Delta\lambda$ is dependent on the molecular structure of the nematic liquid crystal itself, and it is possible to increase $\Delta\lambda$ by increasing (ne-no). However, (ne-no) is generally set to 0.3 or less. When (ne-no) is greater than 0.3, liquid crystal properties (e.g., alignment property and liquid crystal temperature) may be insufficient, and practical application may be difficult. Therefore, the selective reflection wavelength band width $\Delta\lambda$ in the cholesteric liquid crystal layer is about 150 nm at maximum, and generally preferably about 30 nm to 100 nm.

The selective reflection center wavelength $\lambda$ in the cholesteric liquid crystal layer is expressed by the following Equation 2.

< Equation 2 >

$$\lambda = (ne+no)P/2$$

wherein "ne" and "no" are identical to those in Equation 1, and "P" represents a helical pitch length for each turn of the cholesteric liquid crystal helix.

As shown in Equation 2, the selective reflection center wavelength $\lambda$ is dependent on the average refractive index and on helical pitch length P of the cholesteric liquid crystal layer when the helical pitch is constant. Thus, to enlarge the selective reflection property of the cholesteric liquid crystal layer, each of the cholesteric liquid crystal layers preferably has different selective reflection center wavelength and the same rotation direction of the helix (clockwise or counterclockwise). The selective reflection wavelength band in each of the cholesteric liquid crystal layers is preferably continuous with each other. As used herein, "continuous" means that no gap is present between two selective reflection

wavelength bands and the reflectance in this range is substantially 40% or more.

Therefore, it is preferable that the distance between the selective reflection center wavelengths $\lambda$ in each of the cholesteric liquid crystal layers be in the range in which each of the selective reflection wavelength band is continuous to at least one of other selective reflection wavelength bands.

The filter layer preferably has a light reflectance of 40% or more for light of a wavelength range of $\lambda_0$ to $\lambda_0$/cos20° (where $\lambda_0$ represents the wavelength of irradiation light) incident at an angle of $\pm$20° when the vertical incidence is 0°. Particularly preferably, the filter layer has a light reflectance of 40% or more for light of a wavelength range of $\lambda_0$ to $\lambda_0$/cos40° (where $\lambda_0$ represents the wavelength of irradiation light) incident at an angle of $\pm$40° when the vertical incidence is 0°.

When the light reflectance is 40% or more for light of a wavelength range of $\lambda_0$ to $\lambda_0$/cos20°, and particularly $\lambda_0$ to $\lambda_0$/cos40° ($\lambda_0$ represents the wavelength of irradiation light), it is possible to eliminate the angle dependency of the reflection of irradiation light and employ a lens optical system used for the ordinary optical recording medium.

Specifically, a filter layer having the reflection characteristics shown in FIG. 3 is obtained by laminating three cholesteric liquid crystal layers having different selective reflection center wavelengths, and having the same rotation direction of the helix. FIG. 3 shows that the reflectance of the filter for a vertical incident light (0°) is 40% or more. In contrast to this, the reflection characteristics peak shifts to shorter wavelengths as light is incident from the oblique directions, and the reflection characteristics is like that shown in FIG. 3 when light is inclined at an angle of 40° in the liquid crystal layer.

Likewise, a filter layer having the reflection property shown in FIG. 5 is obtained by laminating two cholesteric liquid crystal layers having different selective reflection center wavelengths and having the same rotation direction of the helix. FIG. 5 shows that the reflection characteristics of the filter for a vertical incident light (0°) is 40% or more. By contrast, in the case of incident light from oblique directions, the reflection characteristics peak shifts to shorter wavelengths as light is incident from the oblique directions, and the reflection characteristics is like that shown in FIG. 6 when light is inclined at an angle of 20° in the liquid crystal layer.

As for a reflection region $\lambda_0$ to 1.3$\lambda_0$ shown in FIG. 3, when $\lambda_0$ is 532 nm, 1.3$\lambda_0$ is 692 nm. When the servo beam has a wavelength of 655 nm, the servo beam is reflected. The range of $\lambda_0$ to 1.3$\lambda_0$ shown here is an adequacy for the $\pm$40° incident light in the filter for optical recording medium. When such largely inclined light is used, servo control can be performed without trouble by masking the servo beam at an angle of incidence within $\pm$20°. By sufficiently increasing the average refractive index of each of the cholesteric liquid crystal layers in the filter to be used, it is easy to design all the angles of incidence within $\pm$20° in the filter for optical recording medium. This can be achieved by laminating two cholesteric liquid crystal layers that show a wavelength range of $\lambda_0$ to 1.1$\lambda_0$ shown in FIG. 5, and thus there is no trouble to transmit the servo beam.

Therefore, from the results in FIGs. 3 to 6, even when the incidence wavelength is inclined at 0° to 20° (preferably 0° to 40°), the reflectance of 40% or more is assured in the filter for optical recording medium of the present invention. Thus, a filter layer having no trouble in reading out signals is obtained.

The cholesteric liquid crystal layer is not particularly limited and may be appropriately selected depending on the purpose, as long as it satisfies the above properties. However, as described above, it contains the nematic liquid crystal compound and the photoreactive chiral compound, further contains the polymerizable monomer, and still further contains other component(s), as necessary.

-Nematic Liquid Crystal Compound-

The nematic liquid crystal compound is characterized in that liquid crystal phase thereof is stabilized at temperature equal to or lower than the liquid crystal transition temperature and may be appropriately selected from the liquid crystal compound, the high-molecular liquid crystal compound and a polymerizable liquid crystal compound having a refractive index anisotropy $\Delta$n of 0.10 to 0.40 depending on the purpose. The nematic liquid crystal is aligned using an alignment substrate that has been subjected to an alignment treatment such as rubbing during a liquid crystal state upon melting, directly cooled for immobilization, and thereby used as a solid phase.

The nematic liquid crystal compound is not particularly limited and may be appropriately selected depending on the purpose, for example, the following compounds can be exemplified.

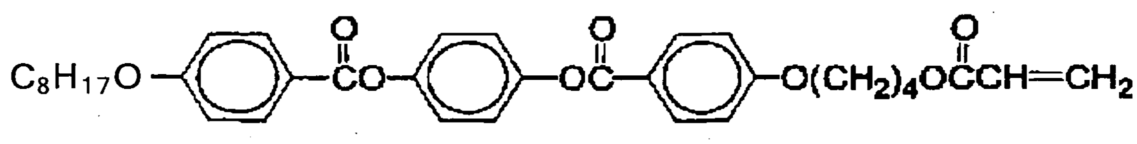

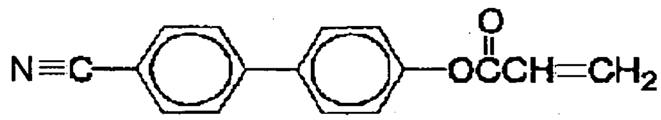

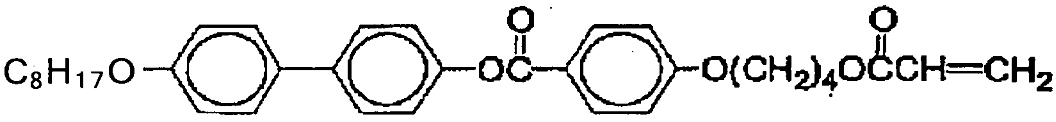

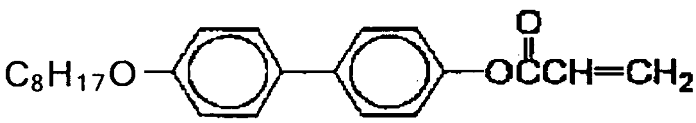

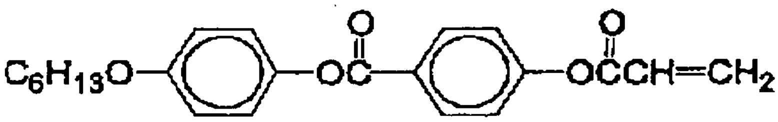

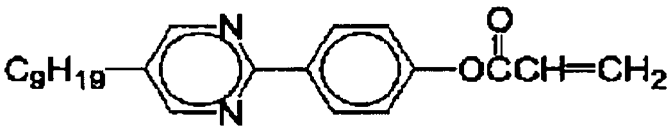

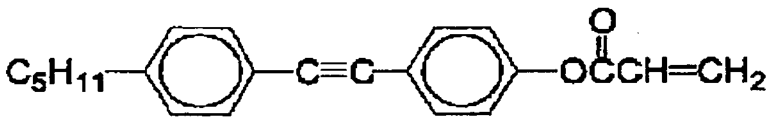

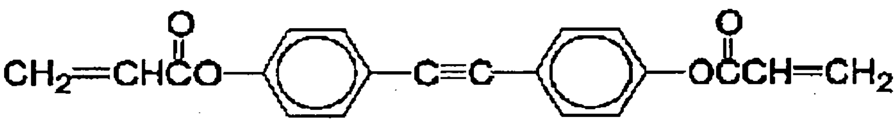

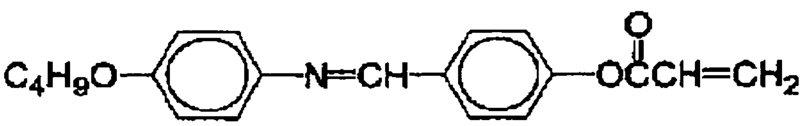

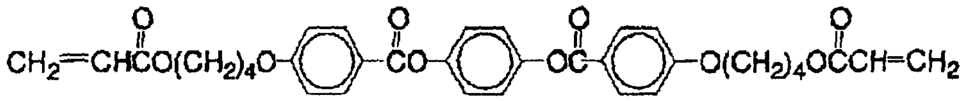

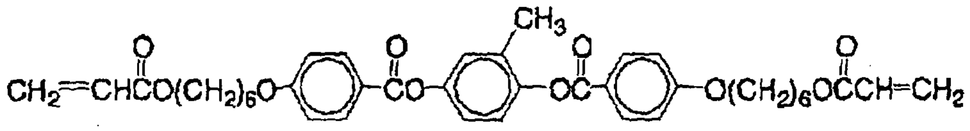

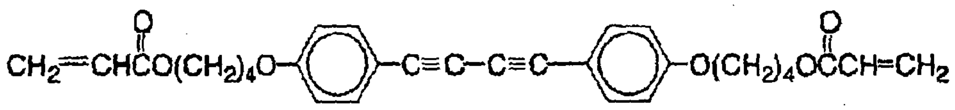

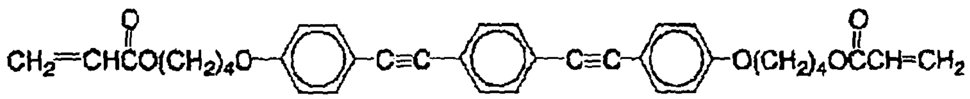

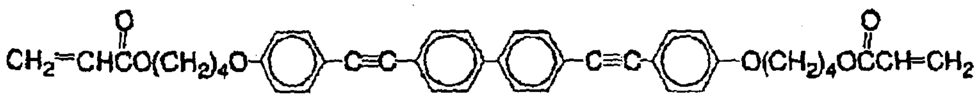

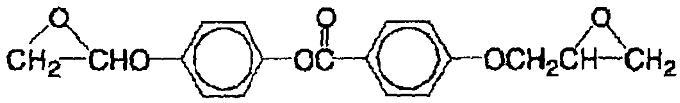

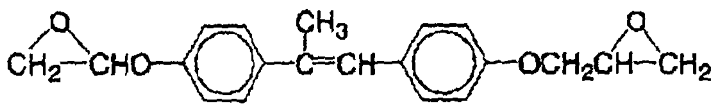

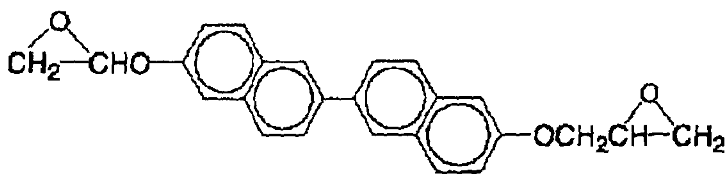

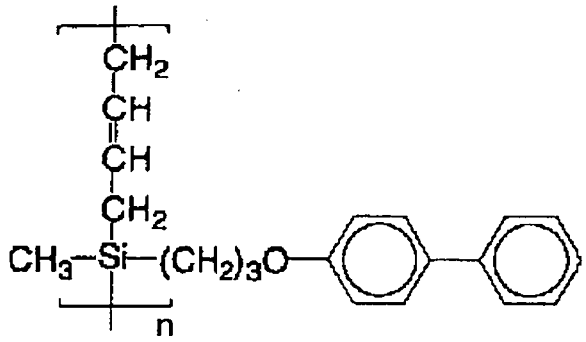

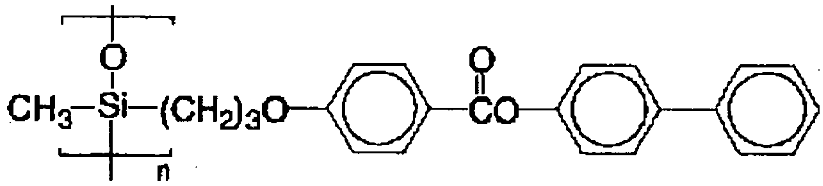

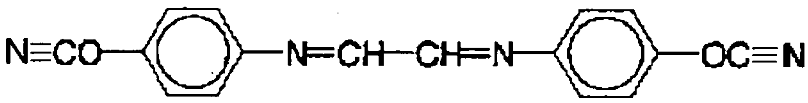

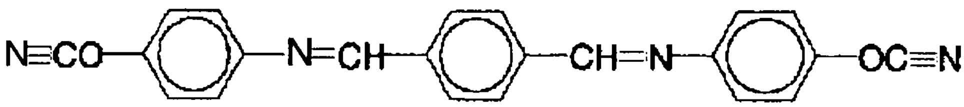

In the above formulas, n represents an integer of 1 to 1,000. Those obtained by changing the side chain linking group to the following structures in the above example compounds can also be preferably exemplified.

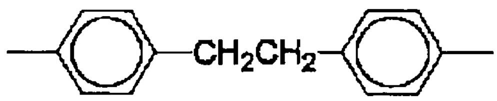

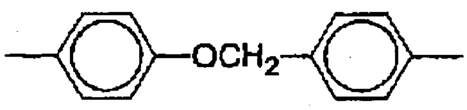

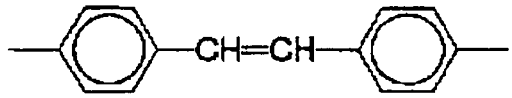

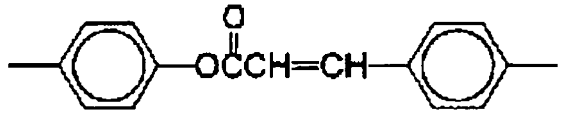

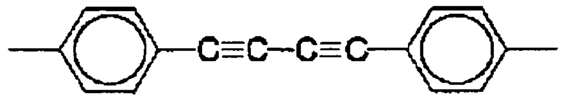

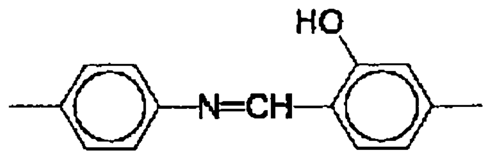

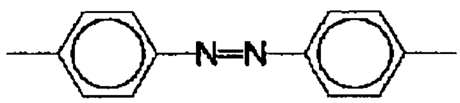

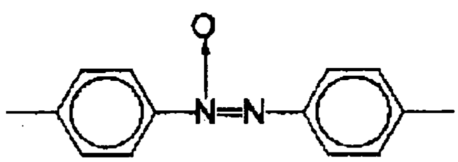

Among the above example compounds, as the nematic liquid crystal compound, the nematic liquid crystal compounds having a polymerizable group in the molecule are preferable in terms of assuring a sufficient curability. Of these, ultraviolet (UV) polymerizable liquid crystals are suitable. As the UV polymerizable liquid crystal, commercially available products can be used. Examples thereof include a trade name of PALIOCOLOR LC242 manufactured by BASF, a trade name of E7 manufactured by Merck, a trade name of LC-SILICON-CC3767 manufactured by Wacker-Chem, and trade names of L35, L42, L55, L59, L63, L79 and L83 manufactured by Takasago International Corporation.

The content of the nematic liquid crystal compound is preferably 30% by mass to 99% by mass and more preferably 50% by mass to 99% by mass, on the basis of the total solid content mass in each of the cholesteric liquid crystal layers. When the content is less than 30% by mass, the alignment of the nematic liquid crystal compound is sometimes insufficient.

-Photoreactive Chiral Compound-

The photoreactive chiral compound is not particularly limited and may be appropriately selected from those known in the art depending on the purpose. It preferably contains a chiral site and a photoreactive group, in terms of enhancing hue and color purity improvement of the liquid crystal compounds. Examples thereof include an isomannide compound, catechin compound, isosorbide compound, fenchone compound, carvone compound and binaphthal compound, and additionally, compounds expressed below. These may be used alone or in combination of two or more. Of these, at least one selected from the isosorbide compound, the isomannide compound, and the binaphthal compound is preferred.

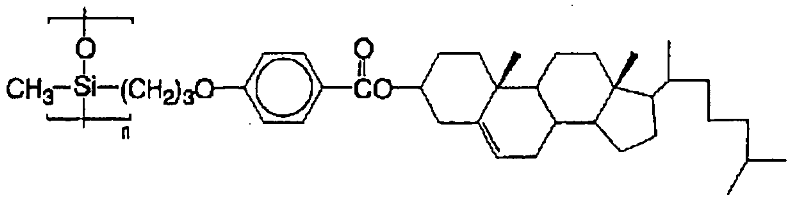

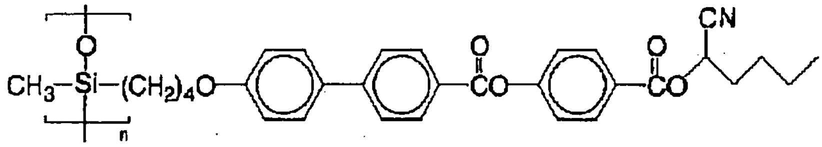

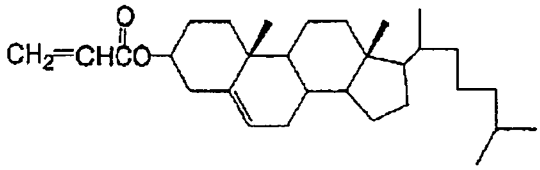

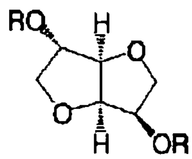

R = 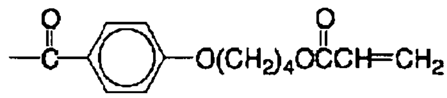

Left-handed helix

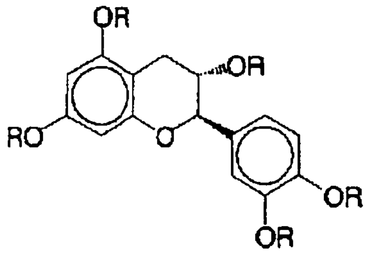

R = 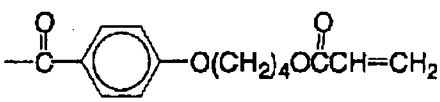

Left-handed helix

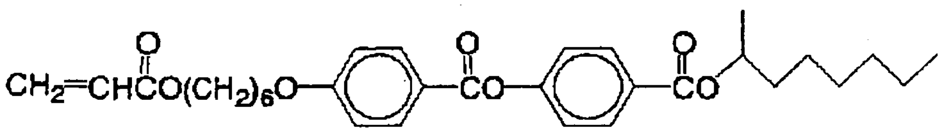

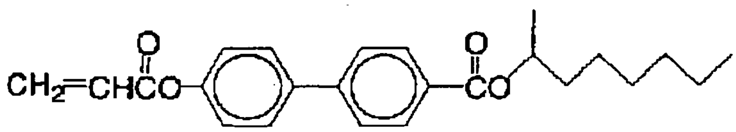

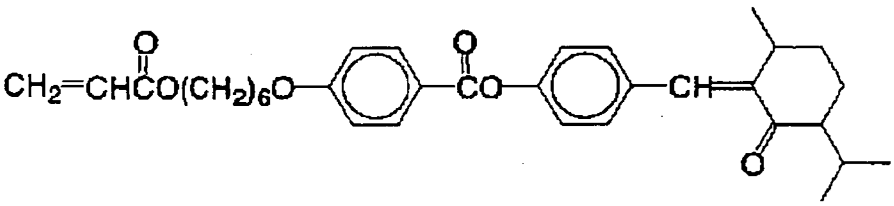

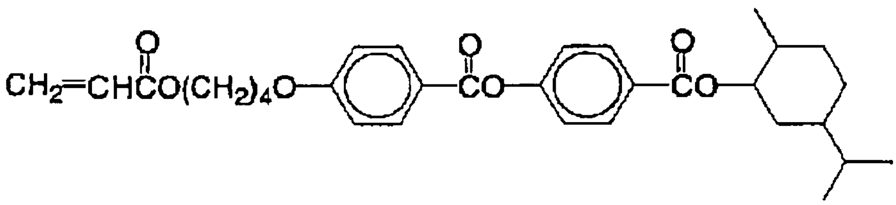

As the photoreactive chiral compound, commercially available products can be used, and examples of the commercially available products include trade names of S101, R811 and CB15 manufactured by Merck, and a trade name of PALIOCOLOR LC756 manufactured by BASF.

The content of the photoreactive chiral compound is preferably 0% by mass to 30% by mass and more preferably 0% by mass to 20% by mass on the basis of the total solid content mass in each of the cholesteric liquid crystal layers. When the content is more than 30% by mass, the alignment of the cholesteric liquid crystal layer may be insufficient.

-Polymerizable Monomer-

A polymerizable monomer can also be used in combination in the cholesteric liquid crystal layer for the purpose of enhancing the degree of cure such as film strength. When the polymerizable monomer is combined, the twist force of the liquid crystal due to light irradiation is changed (patterning) (e.g., the distribution of the selective reflection wavelengths is formed), subsequently, its helical structure (selective reflection property) is immobilized, and the strength of the cholesteric liquid crystal layer after being immobilized can be further enhanced. However, when the liquid crystal compound has a polymerizable group in the same molecule, the polymerizable monomer is not necessarily added therein.

The polymerizable monomer is not particularly limited and may be appropriately selected from those known in the art depending on the purpose. Examples thereof include monomers having an ethylenically unsaturated bond. Specifically, multifunctional monomers such as pentaerythritol tetraacrylate and dipentaerythritol hexaacrylate are exemplified.

Specific examples of the monomers having an ethylenically unsaturated bond include the compounds shown below. These may be used alone or in combination of two or more.

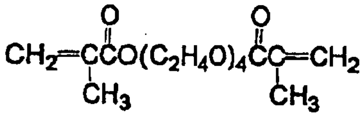

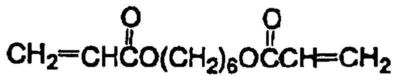

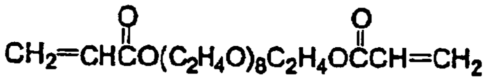

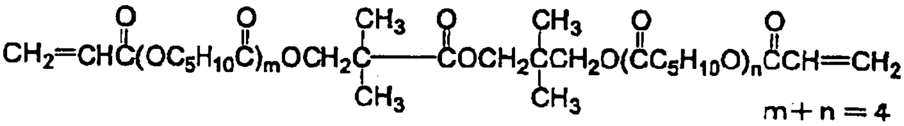

m+n=4

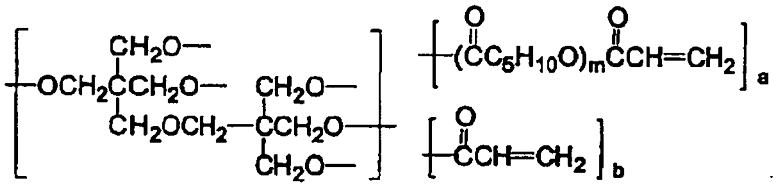

A : m=1, a=6, b=0
B : m=2, a=6, b=0

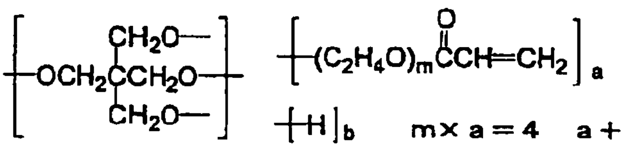

m×a=4 a+b=4

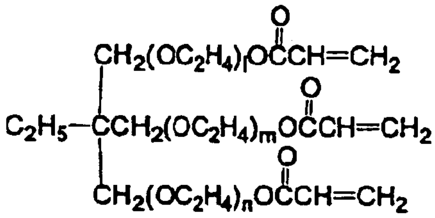

l+m+n=3. 5

The content of the polymerizable monomer to be added is preferably 0% by mass to 50% by mass and more preferably 1% by mass to 20% by mass on the basis of the total solid content mass in each of the cholesteric liquid crystal layers. When the content is more than 50% by mass, the alignment of the cholesteric liquid crystal layer may be inhibited.

- Other Components -

The other components are not particularly limited and may be appropriately selected depending on the purpose. Examples thereof include a photopolymerizable initiator, sensitizer, binder resin, polymerization inhibitor, solvent, surfactant, thickener, dye, pigment, ultraviolet ray absorber and gelling agent.

The photopolymerizable initiator is not particularly limited and may be appropriately selected from those known in the art depending on the purpose. Examples thereof include p-methoxyphenyl-2,4-bis(trichloromethyl)-s-triazine, 2-(p-butoxystyryl)-5-trichloromethyl 1,3,4-oxadiazol, 9-phenylacridine, 9,10-dimethylbenzfenadine, benzophenone/Michler's ketone, hexaarylbiimidazole/mercaptobenzimidazole, benzyldimethylketal, and thioxanthone/amine. These may be used alone or in combination of two or more.

As the photopolymerizable initiator, commercially available products can be used, and examples of the commercially available products include IRGACURE 907, IRGACURE 369, IRGACURE 784 and IRGACURE 814 manufactured by Ciba Specialty Chemicals, and Lucilin TPO manufactured by BASF.

The content of the photopolymerizable initiator to be added is preferably 0.1% by mass to 20% by mass and more preferably 0.5% by mass to 5% by mass on the basis of the total solid content mass in each of the cholesteric liquid crystal layers. When the content is less than 0.1 % by mass, it may take a long time because a curing efficiency upon light irradiation is low. When it exceeds 20% by mass, light transmittance in the ultraviolet ray region to a visible light region may be inferior.

The sensitizer is added to enhance the curing degree of the cholesteric liquid crystal layer, as necessary.

The sensitizer is not particularly limited and may be appropriately selected from those known in the art depending on the purpose. Examples thereof include diethyl thioxanthone and isopropyl thioxanthone.

The content of the sensitizer to be added is preferably 0.001 % by mass to 1.0% by mass on the basis of the total solid content mass in each of the cholesteric liquid crystal layers.

The binder resin is not particularly limited and may be appropriately selected from those known in the art depending on the purpose. Examples thereof include polyvinyl alcohol; polystyrene compounds such as polystyrene and poly-$\alpha$-methylstyrene; cellulose resins such as methylcellulose, ethylcellulose and cellulose acetate; acidic cellulose derivatives having carboxyl group in the side chain; acetal resins such as polyvinyl formal and polyvinyl butyral; methacrylic acid copolymers, acrylic acid copolymers, itaconic acid copolymers, crotonic acid copolymers, maleic acid copolymers, partially esterified maleic acid copolymers; homopolymers of alkyl acrylate ester or homopolymers of alkyl methacrylate ester; other polymers having hydroxyl group. These may be used alone or in combination of two or more.

Examples of the alkyl groups in the homopolymers of alkyl acrylate ester or the homopolymers of alkyl methacrylate ester include methyl, ethyl, n-propyl, n-butyl, isobutyl, n-hexyl, cyclohexyl and 2-ethylhexyl groups.

Examples of the other polymers having the hydroxyl group include copolymers of benzyl (meth)acrylate/ (homopolymer of methacrylic acid) acrylic acid and polygenetic copolymers of benzyl (meth)acrylate/ (meth)acrylic acid/ another monomer.

The content of the binder resin to be added is preferably 0% by mass to 80% by mass and more preferably 0% by mass to 50% by mass on the basis of the total solid content mass in each of the cholesteric liquid crystal layers. When the content is more than 80% by mass, the alignment of the cholesteric liquid crystal layer may be insufficient.

The polymerization inhibitor is not particularly limited and may be appropriately selected depending on the purpose. Examples thereof include hydroquinone, hydroquinone monomethyl ether, phenothiazine, benzoquinone and derivatives thereof.

The content of the polymerization inhibitor to be added is preferably 0 % by mass to 10 % by mass and more preferably 100 ppm by mass to 1% by mass on the basis of the solid content of the polymerizable monomer.

The solvent is not particularly limited and may be appropriately selected from those known in the art depending on the purpose. Examples thereof include alkoxypropionate esters such as methyl 3-methoxypropionate ester, ethyl 3-methoxypropionate ester, propyl 3-methoxypropionate ester, methyl 3-ethoxypropionate ester, ethyl 3-ethoxypropionate ester and propyl 3-ethoxypropionate ester; esters of alkoxy alcohol such as 2-methoxypropyl acetate, 2-ethoxypropyl acetate and 3-methoxybutyl acetate; lactate esters such as methyl lactate and ethyl lactate; ketones such as methyl ethyl ketone, cyclohexanone and methyl cyclohexanone; $\gamma$-butylolactone, N-methyl pyrrolidone, dimethyl sulfoxide, chloroform and tetrahydrofuran. These may be used alone or in combination of two or more.

<Filter for Optical Recording Medium>

The filter for optical recording medium is a laminate in which the filter layer and other layers appropriately selected as necessary are disposed on the base.

<Base>

The shape, structure and size of the base are not particularly limited and may be appropriately selected depending on the purpose. Examples of the shape include a flat plate and a sheet. The structure may be a monolayer structure or a laminated structure. The size may be appropriately selected depending on the size of the filter for optical recording medium.

The materials of the base are not particularly limited and any of inorganic materials and organic materials may be suitably used.

Examples of the inorganic materials include glass, quartz and silicon.

Examples of the organic materials include acetate resins such as cellulose triacetate, polyester resins, polyether sulfone resins, polysulfone resins, polycarbonate resins, polyamide resins, polyimide resins, polyolefin resins, acryl resins, polynorbornene resins, cellulose resins, polyacrylate resins, polystyrene resins, polyvinyl alcohol resins, polyvinyl chloride resins, polyvinylidene chloride resins, and polyacryl resins. These may be used alone or in combination of two or more.

The base may be appropriately synthesized, or commercially available products may be used therefor.

The thickness of the base is not particularly limited and may be appropriately selected depending on the purpose. It is preferably 10 μm to 500 μm and more preferably 50 μm to 300 μm. When the thickness of the substrate is less than 10 μm, adhesiveness may be lowered due to flexibility of the substrate. Meanwhile, when it exceeds 500 μm, focus positions of the information beam and the reference beam must be shifted substantially, and thus the size of the optical system may be large inconveniently.

For the method for forming the filter for optical recording medium, the filter can be suitably manufactured by the method for producing the optical recording medium described later, and for example, each of the cholesteric liquid crystal layers can be formed by applying on the base a coating solution for each of the cholesteric liquid crystal layers, which is prepared using the above solvent, by means of a desired coating method.

As a technique that offers the best mass production aptitude, it is preferable that the base be prepared in a roll shape and the coating solution for each of the cholesteric liquid crystal layers be applied on the base by a lengthy continuous coater such as a bar coater, a die coater, a blade coater, or a curtain coater.

The thickness of each of the cholesteric liquid crystal layers is preferably 1 μm to 10 μm and more preferably 2 μm to 7 μm. When the thickness is less than 1 μm, the selective reflectance may be insufficient. When it exceeds 10 μm, the uniform alignment of the liquid crystal layer may be disturbed.

The thickness (total thickness of each cholesteric liquid crystal layer except for the base) of the filter for optical recording medium is, for example, preferably 1 μm to 30 μm and more preferably 3 μm to 10 μm.

The cholesteric liquid crystal layer is not particularly limited and may be appropriately selected depending on the purpose. The cholesteric liquid crystal layer is preferably formed by applying the coating solution for each of the cholesteric liquid crystal layers on the base, being aligned and immobilized and punched out including the base into a disc shape, and then being disposed on the second substrate. When used for the filter layer of the optical recording medium, the cholesteric liquid crystal layer may be directly disposed on the second substrate without the base.

The filter for optical recording medium of the present invention may be used in various fields and suitably used for the formation or the production of the holographic optical recording medium, and for the following holographic optical recording medium and the method for producing the same, and the optical recording method and the optical reproducing method of the present invention.

- First Substrate and Second Substrate -

First substrate and second substrate are not particularly limited and may be appropriately selected depending on the purpose. For example, these may be identical or different substrates, and preferably have at least the same shape and size. The shape, structure and size of the substrate are not particularly limited and may be appropriately selected depending on the purpose. Examples of the shapes include a disc shape and a card shape. It is necessary to select the material which can assure the mechanical strength of the optical recording medium. When the recording and reproducing beams pass through the substrate, the substrate is required to be sufficiently transparent in the wavelength range of the beams.

For the substrate material, glass, ceramic and resin are generally used, and resin is particularly suitable in terms of molding property and cost.

Examples of the resins include polycarbonate resins, acryl resins, epoxy resins, polystyrene resins, acrylonitrile-styrene copolymers, polyethylene resins, polypropylene resins, silicone resins, fluorine resins, ABS resins and urethane resins.

Of these, the polycarbonate resins and the acryl resins are particularly preferable in terms of molding property, optical property and cost.

The substrate may be appropriately synthesized or the commercially available products may be used therefor.

In the substrate, address-servo areas are provided at given angles to one another as a plurality of positioning areas linearly extending in the radial direction, and sectors between adjacent address-servo area serve as data areas. In the address-servo area, information for performing focus servo and tracking servo by a sampled servo system and address information have been recorded (pre-formatted) in advance in the form of emboss pits (servo pits). The focus servo can be performed using a reflection side of the reflective film. As the information for performing the tracking servo, for example, wobble pits can be used. When the optical recording medium has a card shape, the servo pit pattern is not necessary.

The thickness of the substrate is not particularly limited and may be appropriately selected depending on the purpose. It is preferably 0.1 mm to 5 mm and more preferably 0.3 mm to 2 mm. When the thickness of the substrate is less than 0.1 mm, deformation of the shape during disc storage may not be suppressed. When it exceeds 5 mm, the weight of entire disc is large and excessive load may be imposed on the drive motor.

- Recording layer -

In the recording layer, information can be recorded by utilizing the holography. The material to be used is such that optical properties such as absorbance index and refractive index are changed depending on the intensity of electromagnetic wave when the electromagnetic wave having the given wavelength is applied.

The material of the optical recording layer may be appropriately selected depending on the purpose; examples thereof include (1) polymerizable photopolymers that undergo polymerization reaction upon irradiation, (2) photorefractive materials that exhibit photorefractive effect to modulate the refractive index by causing a spatial electric charge distribution upon irradiation, (3) photochromic materials that modulate the refractive index by causing a molecular isomerization upon irradiation, (4) inorganic materials such as lithium niobate and barium titanate and (5) chalcogen materials.

The photopolymer (1) is not particularly limited and may be appropriately selected depending on the purpose. Examples thereof include the photopolymer containing a monomer and a photoinitiator, and further containing other components such as sensitizers and oligomers, as necessary.

Examples of the photopolymers include those described in, for example, "Photopolymer Handbook" (Kogyo Chosakai Publishing Co., Ltd., 1989), "Photopolymer Technology" (Nikkan Kogyo Shinbun, 1989), SPIE Proceedings Vol. 3010 p. 354-372 (1997) and SPIE Proceedings Vol. 3291 p. 89-103 (1998). Also, examples of the photopolymers include those described in U. S. Patent Nos. 5,759,721, 4,942,112, 4,959,284 and 6,221,536, International Publication Nos. WO97/44714, WO97/13183, WO99/26112 and WO97/13183, Japanese Patent (JP-B)Nos. 2880342, 2873126, 2849021, 3057082 and 3161230, Japanese Patent Application Laid-Open (JP-A) Nos. 2001-316416 and 2000-275859.

Examples of the methods of irradiating the photopolymer with a recording beam to change its optical property include a method of utilizing diffusion of a low-molecular component. In order to alleviate the volume change upon polymerization, a component which diffuses in a direction opposite to a polymerization component may be added, or a compound having an acidic cleavage structure may be separately added in addition to a polymer. When the recording layer is formed using the photopolymer containing the low-molecular component, a structure capable of keeping a liquid in the recording layer may be required. When the compound having the acidic cleavage structure is added, the volume change may be inhibited by compensating an expansion caused by the cleavage and a shrinkage caused by the monomer polymerization.

The monomer is not particularly limited and may be appropriately selected depending on the purpose. Examples thereof include radical polymerizable monomers having an unsaturated bond such as acryl and methacryl groups and cation polymerizable monomers having an ether structure such as epoxy and oxetane rings. These monomers may be monofunctional or multifunctional, and may also be those utilizing a photo-crosslinking reaction.

Examples of the radical polymerizable monomers include acryloylmorpholine, phenoxyethyl acrylate, isobornyl acrylate, 2-hydroxypropyl acrylate, 2-ethylhexyl acrylate, 1,6-hexanediol diacrylate, tripropylene glycol diacrylate, neopentyl glycol PO modified diacrylate, 1,9-nonanediol diacrylate, hydroxypivalate neopentyl glycol diacrylate, EO modified bisphenol A diacrylate, polyethylene glycol diacrylate, pentaerythritol triacrylate, pentaerythritol tetraacrylate, pentaerythritol hexaacrylate, EO modified glycerol triacrylate, trimethylolpropane triacrylate, EO modified trimethylolpropane triacrylate, 2-naphtho-1-oxyethyl acrylate, 2-carbazoyl-9-yl-ethyl acrylate, (trimethylsilyloxy)dimethylsilylpropyl acrylate, vinyl-1-naphthoate and N-vinyl carbazole.

Examples of the cation polymerizable monomers include bisphenol A epoxy resins, phenol novolak epoxy resins, glycerol triglycidyl ether, 1,6-hexane glycidyl ether, vinyl trimethoxysilane, 4-vinylphenyl trimethoxysilane, γ-methacryloxypropyl triethoxysilane and compounds expressed by the following Structural Formulas (A) to (E).

These monomers may be used alone or in combination of two or more.

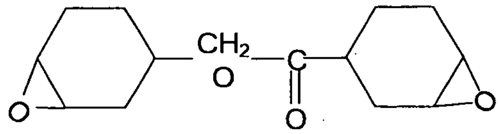

Structural Formula (A)

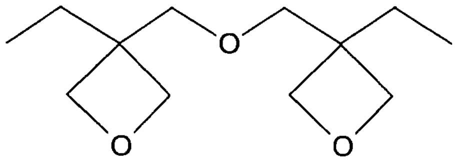

Structural Formula (B)

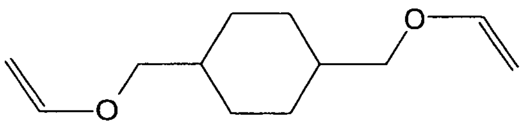

Structural Formula (C)

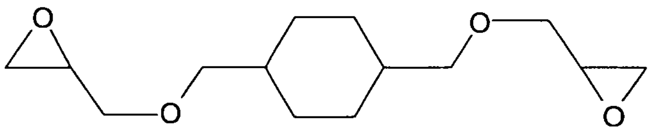

Structural Formula (D)

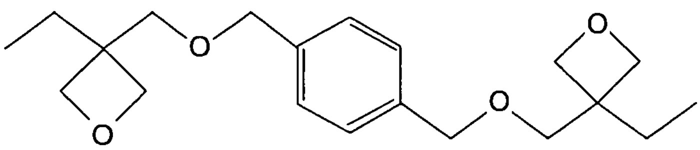

Structural Formula (E)

The photoinitiator is not particularly limited as long as it has a sensitivity to the recording beam. Examples thereof include materials which induce radical polymerization, cation polymerization and crosslinking reaction by light irradiation.

Examples of the photoinitiators include 2,2'-bis(o-chlorophenyl)-4,4',5,5'-tetraphenyl-1,1'-biimidazole, 2,4,6-tris(trichloromethyl)-1,3,5-triazine, 2,4-bis(trichloromethyl)-6-(p-methoxyphenylvinyl)-1,3,5-triazine, diphenyliodonium tetrafluoroborate, diphenyliodonium hexafluorophosphate, 4,4'-di-t-butyl diphenyliodonium tetrafluoroborate, 4-diethylaminophenylbenzenediazonium hexafluorophosphate, benzoin, 2-hydroxy-2-methyl-1-phenylpropane-2-one, benzophenone, thioxanthone, 2,4,6-trimethylbenzoyldiphenylacylphosphine oxide, triphenylbutyl borate tetraethyl ammonium and titanocene compounds represented by the following Structural Formulas. These may be used alone or in combination of two or more. A sensitizing dye may be combined in accordance with the wavelength of irradiation light.

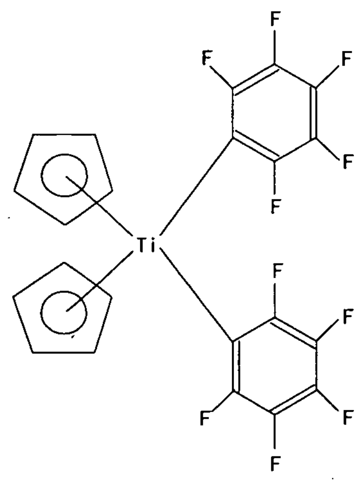

The photopolymer is obtained by stirring and mixing the monomer, the photoinitiator and if necessary other component(s) to react them. When the resulting photopolymer has a sufficiently low viscosity, the recording layer can be formed by casting. Meanwhile, when the photopolymer has a high viscosity, which can not be cast, the recording layer can be formed by placing the photopolymer on the second substrate using a dispenser and pressing the first substrate against the photopolymer as if covering with a lid to spread over the entire surface thereof.

The above-described photorefractive materials (2) is not particularly limited and may be appropriately selected depending on the purpose, as long as it exhibits the photorefractive effect. Examples thereof include those containing a charge generating material and a charge transporting material, and further contains other component(s) as necessary.

The charge generating material is not particularly limited, may be appropriately selected depending on the purpose. Examples thereof include phthalocyanine dyes/ pigments such as metal phthalocyanine and non-metal phthalocyanine and derivative thereof; naphthalocyanine dyes/pigments; azo based dyes/pigments such as monoazo-, diazo- and triazo-dyes/ pigments; perylene based dyes/ pigments; indigo based dyes/ pigments; quinacridone based dyes/ pigments; polycyclic quinone based dyes/ pigments such as anthraquinone and anthoanthorone; cyanine based dyes/ pigments; charge transfer complexes composed of an electron receiving substance and an electron releasing substance such as TTF-TCNQ; azulenium salts; fullerene such as $C_{60}$ and $C_{70}$ and methanofullerene which is a derivative thereof. These may be used alone or in combination of two or more.

The electron transporting material is the material which transports a hole or an electron, and may be a low-molecular compound or a high-molecular compound.

The electron transporting material is not particularly limited and may be appropriately selected depending on the purpose. Examples thereof include nitrogen-containing cyclic compounds such as indole, carbazole, oxazole, inoxazole, thiazole, imidazole, pyrazole, oxadiazole, pyrazoline, thiathiazole and triazole, and derivative thereof; hydrazine compounds; triphenylamines; triphenylmethanes; butadienes; stilbenes; quinone compounds such as anthraquinone diphenoquinone, and derivatives thereof; fullerenes such as $C_{60}$ and $C_{70}$ and derivatives thereof; $\pi$ conjugated polymers or oligomers such as polyacetylene, polypyrrol, polythiophene and polyaniline; $\sigma$ conjugated polymers or oligomers such as polysilane and polygermane; polycyclic aromatic compounds such as anthracene, pyrene, phenanthrene and coronen. These may be used alone or in combination of two or more.

As the method of forming the recording layer using the photorefractive material, for example, forming a coating film using a coating solution in which the photorefractive material is dissolved or dispersed in a solvent, and removing the solvent from the coating film so as to form the recording film. Also, the recording layer can be formed by forming a coating film using the photorefractive material which is heated to fluidize and rapidly cooling the coating film.

The photochromic material (3) is not particularly limited and may be appropriately selected depending on the purpose, as long as it causes a photochromic reaction. Examples thereof include azobenzene compounds, stilbene compounds, indigo compounds, thioindigo compounds, spiropyran compounds, spirooxazine compounds, fluxide compound, anthracene compounds, hydrazon compounds and cinnamate compounds. Of these, the azobenzene derivatives and the stilbene derivatives which cause the structural change due to cis-trans isomerization by light irradiation, and the spiropyran derivatives and the spirooxazine derivatives which cause the structural change of ring-opening/ring-closing by light irradiation are particularly preferable.

Examples of the above-described chalcogen materials (5) include a material containing chalcogenide glass which contains a chalcogen element, and metallic particles composed of a metal dispersed in the chalcogenide glass and diffusible therein by light irradiation.

The chalcogenide glass is composed of a non-oxide based amorphous material containing the chalcogen element such as S, Te or Se, and is not particularly limited as long as it can optically dope the metallic particles.

Examples of the amorphous materials containing the chalcogen element include Ge-S based glass, As-S based glass, As-Se based glass and As-Se-Ce based glass. Of these, the Ge-S based glass is preferable. When the Ge-S based glass is used as the chalcogenide glass, a composition ratio of Ge and S which compose the glass can be optionally changed depending on the wavelength of irradiation light, but the chalcogenide glass having a chemical composition mainly represented by $GeS_2$ is preferable.

The metallic particles are not particularly limited and may be appropriately selected depending on the purpose, as long as they have the property of optically being doped in the chalcogenide glass by light irradiation. Examples thereof include Al, Au, Cu, Cr, Ni, Pt, Sn, In, Pd, Ti, Fe, Ta, W, Zn and Ag. Of these, Ag, Au or Cu has a property of easily optically-doped and Ag is particularly preferable because it is remarkably optically doped.

The content of the metallic particles dispersed in the chalcogenide glass is preferably 0.1% by volume to 2% by volume and more preferably 0.1% by volume to 1.0% by volume based on the total volume of the recording layer. When the content of the metallic particles is less than 0.1 % by volume, insufficient transmittance change by the optical dope leads to the reduction of an accuracy of recording. When it exceeds 2% by volume, the light transmittance of the recording material is reduced and it may be difficult to be sufficiently optically-doped.

The recording layer may be formed according to a method known in the art depending on the materials, and may be suitably formed by, for example, a vapor deposition method, a wet film forming method, an MBE (molecular beam epitaxy) method, a cluster ion beam method, a molecular lamination method, an LB method, a printing method or a transfer method. Of these, the vapor deposition method and the wet film forming method are preferable.

The vapor deposition is not particularly limited and may be appropriately selected from those known in the art depending on the purpose. Examples thereof include a vacuum vapor deposition method, a resistance heating vapor deposition, a chemical vapor deposition method and a physical vapor deposition method. Examples of the chemical vapor deposition methods include a plasma CVD method, a laser CVD method, a heat CVD method and a gas source CVD method.

The formation of the recording layer by the wet film forming method may be suitably performed by using (applying and drying) the solution (coating solution) in which the materials of the recording layer have been dissolved or dispersed in the solvent. The wet film forming method is not particularly limited and may be appropriately selected from those known in the art depending on the purpose. Examples thereof include inkjet method, a spin coating method, a kneader coating method, a bar coating method, a blade coating method, a casting method, a dipping method and a curtain coating method.

The thickness of the recording layer is not particularly limited and may be appropriately selected depending on the purpose. It is preferably 1 $\mu$m to 1,000 $\mu$m and more preferably 100 $\mu$m to 700 $\mu$m.

When the thickness of the recording layer is within the preferable range, even if shift-multiplexing of 10 to 300 fold is performed, a sufficient S/ N ratio can be obtained. It is advantageous in that this effect is remarkable when the thickness of the recording layer is within the more preferable range.

- Reflective film -

The reflective film is formed on the surface of the servo pit pattern on the substrate.

For the material of the reflective film, materials that offer high reflectance to a recording beam and reference beam are preferable. When the wavelength of the light to be adopted is 400 nm to 780 nm, Al, Al alloys, Ag, Ag alloys and the like are preferably used. When the wavelength of the light to be adopted is 650 nm or more, Al, Al alloys, Ag, Ag alloys, Au, Cu alloys, TiN and the like are preferably used.

By using an optical information recording medium which reflects light by the reflective film and can write once or erase information - for example, DVD (Digital Video Disc), directory information indicative of the locations where information has been recorded, the time when information has been rewritten, and the locations where errors have occurred and how information has been rewritten in spare areas can also be written in and erased from the optical information recording medium without adversely affecting holograms.

The formation of the reflective film is not particularly limited and may be appropriately selected depending on the purpose. Various vapor phase growth methods are used, for examples, a vacuum vapor deposition method, a sputtering method, a plasma CVD method, a light CVD method, an ion plating method, an electron beam vapor deposition method and the like. Of these, the sputtering method is excellent in mass productivity and film quality.

The thickness of the reflective film is preferably 50 nm or more and more preferably 100 nm or more so as to realize the sufficient reflectance.

- First Gap Layer -

The first gap layer is provided between the filter layer and the reflective film as needed for smoothing the surface of the second substrate. Moreover, the first gap layer is effective to adjust the size of the hologram formed in the recording layer. Specifically, since somewhat large regions where optical interference between a reference beam for recording and an information beam takes place need to be secured in the recording layer, it is effective to provide a gap between the recording layer and the servo pit pattern.

The first gap layer can be formed by applying a material such as an ultraviolet curable resin over a servo pit pattern by spin coating and curing it. When the filter layer is coated on a transparent base, the transparent base also works as the first gap layer.

The thickness of the first gap layer is not particularly limited and may be appropriately selected depending on the purpose and is preferably 1 μm to 200 μm.

- Second Gap Layer -

The second gap layer is provided between the recording layer and the filter layer as necessary.

The material of the second gap layer is not particularly limited and may be appropriately selected depending on the purpose. Examples thereof include transparent resin films such as cellulose triacetate (TAC), polycarbonate (PC), polyethylene terephthalate (PET), polystyrene (PS), polysulfone (PSF), polyvinyl alcohol (PVA) and polymethyl methacrylate (PMMA); and norbornene based resin films such as a trade name of ARTON film manufactured by JSR and a trade name of Zeonor manufactured by Zeon Corporation. Of these, those having a high isotropy are preferable, and TAC, PC, the trade name of ARTON and the trade name of Zeonor are particularly preferable.

The thickness of the second gap layer is not particularly limited and may be appropriately selected depending on the purpose and is preferably 1 μm to 200 μm.

Here, the optical recording medium of the present invention will be further described in detail below with reference to the drawings.

< First embodiment >

FIG. 7 is a schematic sectional view showing the configuration of the optical recording medium in a first embodiment of the present invention. In this optical recording medium 21 according to the first embodiment, a servo pit pattern 3 is formed on a second substrate 1 made from a polycarbonate resin or a glass, and a reflective film 2 is formed by coating with aluminum, gold or platinum on the servo pit pattern 3. In FIG. 7, the servo pit pattern 3 is formed on the entire surface of a second substrate 1, but as shown in FIG.1, the servo pit pattern may be formed periodically. The height of this servo pit is 1750 angstroms (175 nm) in maximum, which is sufficiently small compared with the thickness of other layers including the second substrate.

A first gap layer 8 is formed by coating the material such as ultraviolet curable resin on the reflective film 2 formed on the second substrate 1 by spin coating. The first gap layer 8 is effective for protecting the reflective film 2 as well as adjusting the size of hologram generated in a recording layer 4. Specifically, since somewhat large regions where optical interference between a reference beam for recording and an information beam takes place need to be secured in the recording layer 4, it is effective to provide a gap between the recording layer 4 and the servo pit pattern 3.

A filter layer 6 is disposed on the first gap layer 8, an optical compensation layer 9 is disposed on the filter layer 6, and the optical recording medium 21 is composed by sandwiching the first gap layer 8, the filter layer 6, the optical compensation layer 9 and the recording layer 4 between a first substrate 5 and the second substrate 1 (a polycarbonate resin substrate or glass substrate).

In FIG. 7, the filter layer 6 transmits only a red light, and does not transmit other lights. Therefore, the information beam and reference beam for recording and reproducing are not transmitted through the filter layer 6, since they are a green or blue light, and never reach the reflective film 2, and then becomes a returning beam to exit from the light entrance/exit surface A.

This filter layer 6 is a laminate in which three layers of cholesteric liquid crystal layers 6a, 6b and 6c are laminated. The filter layer 6 which is the laminate of the cholesteric liquid crystal layers may be formed directly on the first gap layer 8 by a coating method or may be provided by punching out the film in which the laminated three cholesteric liquid crystal layers have been formed on the base into the shape of the optical recording medium. By laminating the three cholesteric liquid crystal layers, a light reflectance of 40% or more can be achieved for light of a wavelength range of $\lambda_0$ to $\lambda_0/\cos 20°$, particularly $\lambda_0$ to $\lambda_0/\cos 40°$ ($\lambda_0$ represents the wavelength of irradiation light), thereby eliminating shift in selective reflection wavelength even when an angle of incidence is changed.

In this embodiment, in which three cholesteric liquid crystal layers 6 are formed, the optical compensation layer 9 is formed on an outermost layer 6a, while contacting the boundary of the recording layer 4, so as to delay light phase,

thereby correcting negative birefringence in the cholesteric liquid crystal layer 6. Therefore, the reproduced image is never distorted.

The optical recording medium 21 in the present embodiment may be a card shape or a disc shape. There is no need to provide a servo pit pattern in a case where the optical recording medium 21 is the card shape, the servo pit pattern is not indispensable. In the optical recording medium 21, the second substrate 1 is 0.6 mm-thick, the first gap layer 8 is 100 μm-thick, the filter layer 6 is 2 to 3 μm-thick, the optical compensation layer 9 is 50μm-thick, the recording layer 4 is 0.6 mm-thick and the first substrate 5 is 0.6 mm-thick, bringing to the total to about 1.95 mm-thick.

Next, optical operations around the optical recording medium 21 will be described with reference to FIG. 9. First, the light (red light) emitted from the servo laser is reflected at almost 100% at a dichroic mirror 13 and passes through an objective lens 12. The servo beam is applied to the optical recording medium 21 so as to adjust a focus on the reflective film 2 by the objective lens 12. That is, the dichroic mirror 13 transmits the light of green or blue wavelength and reflects the light of red wavelength at almost 100%. The servo beam incident from the light entrance/exit surface A of the optical recording medium 21 passes through the first substrate 5, the recording layer 4, the optical compensation layer 9, the filter layer 6 and the first gap layer 8, is reflected in the reflective film 2, passes again through the first gap layer 8, the filter layer 6, the optical compensation layer 9, the recording layer 4 and the first substrate 5, and exits from the entrance/exit surface A. The returning beam, which has exited, passes through the objective lens 12, is reflected at almost 100% at the dichroic mirror 13, and servo information is detected by a servo information detector (not shown in the figure). The detected servo information is used for focus servo, tracking servo, slide servo and the like. The hologram material composing the recording layer 4 is designed so as not to be sensitive to red light. For this reason, even when the servo beam has passed through the recording layer 4 or has been reflected diffusively by the reflective film 2, the recording layer 4 is not adversely affected. The returning beam of the servo beam that has been reflected by the reflective film 2 is reflected at almost 100% by the dichroic mirror 13. Thus, the servo beam is not detected by CMOS sensor or CCD14 for detecting a reproduced image, and does not become noise for the reproduction beam.

In a reflection region of $\lambda_0$ to $1.3\lambda_0$ shown in FIG. 3, when $\lambda_0$ is 532 nm, $1.3\lambda_0$ is 692 nm, and when the servo beam of wavelength is 655 nm, the servo beam is reflected. The range of $\lambda_0$ to $1.3\lambda_0$ shown here is the adequacy of ±40° incident light in the filter layer. However, when such light that is incident at larger angles is intended to be used, a servo operation can be performed without causing any problems by masking the servo beam at an angle of incidence within ±20°. In addition, by securing larger average refractive index in each of the cholesteric liquid crystal layer in the filter layer to be used, it is also possible to readily cover the servo beam in the filter layer at an angle of incidence within ±20°. In that case, it is only necessary to laminate two cholesteric liquid crystal layers having a reflection range of "$\lambda_0$ to $1.1\lambda_0$ as shown in FIG. 5. Thus, transmittance of the servo beam entails no difficulty.

Both the information beam and reference beam for recording generated in the recording/reproduction laser source pass through a polarizing plate 16 and are linearly polarized. The linearly polarized beams then pass through a half mirror 17 and are circularly polarized after passing through a quarter wave plate 15. The circularly polarized beams then pass through the dichroic mirror 13 and the objective lens 11, and are applied onto the optical recording medium 21 in such a way that optical interference takes place between the information beam and reference beam for recording to create interference pattern in the recording layer 4. The information beam and reference beam for recording are incident from the light entrance/exit surface A and interfere with each other in the recording layer 4 to form an interference pattern therein. Thereafter, the information beam and reference beam for recording pass through the recording layer 4, and the optical compensation layer 9, launching into the filter layer 6. There, before reaching the bottom of the filter layer 6, the beams are reflected and become the returning beam. More specifically, the information beam and reference beam for recording do not reach the reflective film 2. This is because the filter layer 6 is composed of laminated three cholesteric liquid crystal layers, and has a property of transmitting only red light. Moreover, as long as the intensity of light that has undesirably passed through the filter layer 6 is suppressed to 20% or less of that of the incident light, there will be no practical problems even when such light reaches the bottom of the filter layer 6 and is reflected back as the returning beam, because this returning beam is again reflected by the filter layer 6 and its intensity in a reproduction beam is as small as 4% (20% x 20%) or less of that of the reproduction beam.

< Second Embodiment >

FIG. 8 is a schematic view showing the configuration of the optical recording medium in a second embodiment of the present invention. In an optical recording medium 22 according to the second embodiment, a servo pit pattern 3 is formed on a second substrate 1 made of polycarbonate resin or glass, and the serve pit pattern 3 is coated with Al, Au, Pt or the like to form a reflective film 2. The height of the servo pit pattern 3 is generally 1750 angstrom (175 nm), as in the case of the first embodiment.

The second embodiment differs from first embodiment in that the optical recording medium 22 has a second gap layer 7 disposed between an optical compensation layer 9 and a recording layer 4.

The filter layer 6 which is a laminate of three cholesteric liquid crystal layers is formed on a first gap layer 8

after the first gap layer 8 is formed, and the same filter layer as in the first embodiment can be used.

In the second gap layer 7 there is a point at which both an information beam and reproduction beam focus; when this area is filled with photopolymer, excessive exposure takes place and thus an excess amount of monomers are consumed, leading to poor multiplexing recording performance. To avoid this, it is effective to provide a transparent and inert second gap layer.

In the optical recording medium 22 a second substrate 1 is 1.0 mm-thick, the first gap layer 8 is 100 μm-thick, the filter layer 6 is 3 μm to 5 μm-thick, the optical compensation layer 9 is 50 μm-thick, the second gap layer 7 is 70 μm-thick, the recording layer 4 is 0.6 mm-thick, and a first substrate 5 is 0.4 mm-thick, bringing to the total to about 2.22 mm.

Upon recording and reproducing information, the optical recording medium 22 having the structure described above is irradiated with a red servo beam and a green information beam and green reference beam for recording and reproducing. The servo beam is incident from the light entrance/exit surface A, passes through the recording layer 4, the second gap layer 7, the optical compensation layer 9, the filter layer 6 and the first gap layer 8, and is reflected by the reflective film 2, and then become a returning beam. This returning beam sequentially passes through the first gap layer 8, the filter layer 6, the optical compensation layer 9, the second gap layer 7, the recording layer 4 and the first substrate 5 again, and exits from the light entrance/ exit surface A. The exited returning beam is used for the focus servo operation, tracking servo operation, and the like. The holographic material composing the recording layer 4 is designed so as not to be sensitive to red light. For this reason, even when the servo beam has passed through the recording layer 4 or has been reflected diffusively by the reflective film 2, the recording layer 4 is not adversely affected. The green information beam and reference beam are incident from the light entrance/ exit surface A and pass through the recording layer 4, the second gap layer 7 and the optical compensation layer 9, and reflected by the filter layer 6 and then become the returning beam. The returning beam sequentially passes through the optical compensation layer 9, the second gap layer 7, the recording layer 4 and first substrate 5, and exits from the light entrance/ exit surface A. Upon reproducing information, both the reference beam for reproducing and a reproduction beam generated by irradiating the recording layer 4 with the reference beam for reproducing do not reach the reflective film 2 and exit from the light entrance/ exit surface A. Note that the optical operations around the optical recording medium 22 (i.e., the objective lens 12, filter layer 6, CMOS sensor or CCD 14 as a detector in FIG. 9) are similar to those in first embodiment (FIG. 7), and the description thereof is omitted.

(Method for Producing Optical Recording Medium)

The method for producing an optical recording medium of the present invention is a method for producing the above-described optical recording medium of the present invention, contains at least a filter layer forming step, and an optical compensation layer forming step, and contains a reflective film forming step, a recording layer forming step, and further contains other steps as necessary.

- Filter Layer Forming Step -

The filter layer forming step is a step of forming the filter layer composed of a laminate in which cholesteric liquid crystal layers are laminated on the second substrate.

For the filter layer forming step, it is preferable in terms of productivity to form the filter layer by processing the filter for optical recording medium of the present invention into a shape of the optical recording medium and adhering the processed filter to the second substrate.

The shape of the optical recording medium is not particularly limited and may be appropriately selected depending on the purpose. Examples thereof include a disc shape and a card shape.

The processing is not particularly limited and may be appropriately selected depending on the purpose. Examples thereof include a cutting out process by a press cutter, a punching out process by a punching cutter and a burning out process by a laser cutter.

Specifically, the filter is bonded to the substrate using an adhesive or a tackiness agent while avoiding inclusion of air bubbles.

The adhesive is not particularly limited and may be appropriately selected depending on the purpose. Examples thereof include a UV curable type, an emulsion type, a one liquid curable type and a two liquid curable type. The known adhesives may be used in combination, optionally.

The tackiness agent is not particularly limited and may be appropriately selected depending on the purpose. Examples thereof include a rubber based tackiness agent, acrylic based tackiness agent, silicone based tackiness agent, urethane based tackiness agent, vinyl alkyl ether based tackiness agent, polyvinyl alcohol based tackiness agent, polyvinyl pyrrolidone based tackiness agent, polyacrylamide based tackiness agent and cellulose based tackiness agent.

The method of laminating the cholesteric liquid crystal layers is not particularly limited and may be appropriately selected from known methods depending on the purpose, and examples thereof include (1) a method of laminating each

of the cholesteric liquid crystal layers separately produced by the adhesive or the tackiness agent, (2) a method of laminating each of the cholesteric liquid crystal layers separately produced by thermal compression bonding, (3) a method of laminating each of the cholesteric liquid crystal layers separately produced by interfacial compatibility, (4) a method of laminating each of the cholesteric liquid crystal layers, in which a cholesteric liquid crystal layer is further coated on the formed cholesteric liquid crystal layer, and (5) a method of laminating each of the cholesteric liquid crystal layers by coating poval (polyvinyl alcohol: PVA) on the cholesteric liquid crystal layer formed on a transparent substrate so as to form a film, rubbing treatment, and then coating a cholesteric liquid crystal layer to be subjected to alignment condition. Of these, the coating method of (5) is preferable in terms of productivity and economical efficiency.

In the method of laminating (1), the adhesive and the tackiness agent are not particularly limited and may be appropriately selected depending on the purpose. Examples thereof include a UV curable adhesive and acryl based tackiness agent. The thickness of the coated adhesive or the tackiness agent is not particularly limited and may be appropriately selected depending on the purpose. In case of the adhesive, it is preferably 0.1 μm to 10 μm and more preferably 0.1 μm to 5 μm, and in case of the tackiness agent, it is preferably 1 to 50 μm and more preferably 2 μm to 30 μmin, in terms of optical property and thinning.

In the method of laminating (2), examples of the methods of thermal compression bonding include a heat sealing method, an ultrasonic method, an impulse sealing method and a high frequency joining method.

In the method of laminating (3), the method for making compatible, for example, a method of coating a solvent which slightly dissolves and swells the cholesteric liquid crystal layer and integrating by interfacial compatibility.

Examples of the solvents which slightly dissolve and swell the cholesteric liquid crystal layer include aromatics such as toluene, benzene and xylene; alcohols such as methanol and ethanol; cyclic hydrocarbon such as cyclohexane and cyclopentane; ketones such as acetone and methyl ethyl ketone (MEK); ethers such as isopropyl ether; esters such as ethyl acetate; and a solvent of chlorines such as chloroform and dichloromethane. Of these, the toluene, the cyclohexane, cyclopentane, the methyl ethyl ketone (MEK) and isopropyl alcohol are particularly preferable.

In the method of laminating (4), the coating method is not particularly limited and may be appropriately selected depending on the purpose. Examples thereof include an inkjet method, a spin coating method, a kneader coating method, a bar coating method, a die coating method, a blade coating method, a casting method, a dipping method and a curtain coating method.

The formation of the cholesteric liquid crystal layer by the above coating method can be suitably performed by using (coating and drying) a solution (coating solution) in which the material of the cholesteric liquid crystal layer is dissolved.

A condition employed when the applied film is further cured with ultraviolet ray as needed is not particularly limited and may be appropriately selected depending on the purpose. For example, the wavelength of the ultraviolet ray to be applied is preferably 160 nm to 380 nm, and more preferably 250 nm to 380 nm. The exposure time is preferably 10 seconds to 600 seconds and more preferably 10 seconds to 300 seconds when an exposure dose is 10 $mW/cm^2$. When the exposure dose is reduced to 1 $mW/cm^2$, generally, the content of the reaction initiator is increased. Thus, the exposure time is not so changed, and is preferably 10 seconds to 600 seconds and more preferably 10 seconds to 300 seconds.

In the method of laminating (5), as the material of the transparent base, any of inorganic materials and organic materials can be used. Examples of the inorganic materials include glass, quartz and silicon. Examples of the organic materials include acetate resins such as cellulose triacetate, polyester resins, polyether sulfone resins, polysulfone resins, polycarbonate resins, polyamide resins, polyimide resins, polyolefin resins, acryl resins, polynorbornene resins, cellulose resins, polyacrylate resins, polystyrene resins, polyvinyl alcohol resins, polyvinyl chloride resins, polyvinylidene chloride resins, and polyacryl resins. These may be used alone or in combination of two or more.

- Optical Compensation Layer Forming Step-

The optical compensation layer forming step is performed by transferring a laminate, in which the optical compensation layer is disposed on a film, onto the filter layer. For example, it is performed by at least one of the following first step and second step.

In the first step, the curable vertically-aligned liquid crystal layer is formed on a isotropic base film as the support, and then a polyvinyl alcohol layer (PVA layer) is formed thereon as necessary, and then horizontal alignment ability is imparted by rubbing so as to form a laminate containing a liquid crystal layer. Next, the obtained laminate is disposed on the filter layer by the methods of laminating (1) to (4) in the filter layer forming step. In this case, the isotropic base film is disposed so as to contact the recording layer which is disposed on the opposite side of the isotropic base film from the filter layer.

In the second step, first, a surface aligned film is formed using a material having negative refractive index anisotropy to produce a compensation film, in which a refractive index ellipsoid is stretched in the thickness direction, and then a polyvinyl alcohol alignment film is coated on the compensation film, and a liquid crystal layer is disposed on

the polyvinyl alcohol alignment film so as to produce a laminate. Next, the obtained laminate is disposed on the filter layer by the methods of laminating (1) to (4) in the filter layer forming step. In this case, the surface aligned film is disposed so as to contact the recording layer which is disposed on the opposite side of the isotropic base film from the filter layer.

(Optical Recording Method and Optical Reproducing Method)

In an optical recording method of the present invention, the information beam and the reference beam are applied onto the optical recording medium of the present invention so that the optical axis of the information beam is collinear with that of the reference beam, the information beam and the reference beam interfere with each other to form an interference pattern, and information is recorded on the recording layer by the interference pattern.

In the optical reproducing method of the present invention, information is reproduced by applying a reference beam to the interference pattern recorded on the recording layer by the optical recording method of the present invention.

As described above, in the optical recording method and the optical reproducing method of the present invention, information is recorded by superimposing the information beam to which the two dimensional intensity distribution has been given on the reference beam having nearly the same intensity as the information beam inside the photosensitive recording layer and utilizing the interference pattern formed by them to generate the optical property distribution inside the recording layer. Meanwhile, when the written information is read out (reproduced), by applying only the reference beam to the recording layer in the same arrangement as upon recording, the reproduction beam having an intensity distribution corresponding to the optical property distribution formed inside the recording layer exits from the recording layer.

Here, the optical recording method and the optical reproducing method of the present invention are carried out using an optical recording and reproducing apparatus of the present invention described below.

The optical recording and reproducing apparatus used for the optical recording method and the optical reproducing method of the present invention will be described with reference to FIG.10.

FIG.10 is a block diagram showing the entire configuration of the optical recording and reproducing apparatus according to one embodiment of the present invention. The optical recording and reproducing apparatus includes an optical recording apparatus and an optical reproducing apparatus.

This optical recording and reproducing apparatus 100 is equipped with a spindle 81 to which an optical recording medium 20 is attached, a spindle motor 82 which rotates the spindle 81 and a spindle servo circuit 83 which controls the spindle motor 82 in order to keep the rotational frequency of the optical recording medium at a given value.

The optical recording and reproducing apparatus 100 is also equipped with a pickup 31 for recording information by applying an information beam and a reference beam for recording to the optical recording medium 20 as well as reproducing the information recorded in the optical recording medium 20 by applying a reference beam for reproducing to the optical recording medium 20 to detect the reproduction beam, and a driving apparatus 84 which enables this pickup 31 to move in the radius direction of the optical recording medium 20.

The optical recording and reproducing apparatus 100 is equipped with a detection circuit 85 for detecting a focus error signal FE, a tracking error signal TE and a reproduction signal RF by output signals from the pickup 31; a focus servo circuit 86 which performs focus servo by driving an actuator in the pickup 31 based on the focus error signal FE detected by this detection circuit 85 to move an objective lens (not shown in the figure) in the thickness direction of the optical recording medium 20; a tracking servo circuit 87 which performs tracking servo by driving the actuator in the pickup 31 based on the tracking error signal TE detected by the detection circuit 85 to move the objective lens in the radius direction of the optical recording medium 20; and a slide servo circuit 88 which performs slide servo by controlling the driving apparatus 84 based on the tracking error signal TE and a command from a controller described later to move the pickup 31 in the radius direction of the optical recording medium 20.

The optical recording and reproducing apparatus 100 is further equipped with a signal processing circuit 89 which reproduces data recorded in the data area in the optical recording medium 20 by decoding output data from CMOS or CCD array, which will be described later, in a pickup 31, reproduces a basic clock by reproduction signal RF from the detection circuit 85 and determines an address; a controller 90 which totally controls the optical recording and reproducing apparatus 100; and an operation unit 91 which gives various instructions to the controller 90.

The controller 90 inputs a basic clock and address information output from a signal processing circuit 89 as well as controls the pickup 31, the spindle servo circuit 83 and the slide servo circuit 88. The spindle servo circuit 83 inputs the basic clock output from the signal processing circuit 89. The controller 90 has CPU (central processing unit), ROM (read only memory) and RAM (random access memory), and CPU and runs programs stored in ROM to realize the functions of the controller 90 utilizing the RAM as a working area.

In the optical recording and reproducing apparatus used for the optical recording method and the optical reproducing method of the present invention, the optical recording medium of the present invention is used, so that diffuse reflection of the information beam and the reference beam from the reflective layer in the optical recording medium

and occurrence of noise can be prevented, without causing shift in selective reflection wavelength, even when an angle of incidence is changed, and high density recording, which has not been conventionally achieved, can be achieved.

Examples

Examples of the present invention will be described below, however, the present invention is not limited in scope to these Examples at all.

(Example 1)

<Production of Laminate of Optical Compensation Layer>

- Production of Support -

A cellulose triacetate film (Fujitac manufactured by Fuji Photo Film Co., Ltd.) was used as a support which was used in a laminate of an optical compensation layer. The cellulose triacetate film had a thickness of 60 μm, a retardation (Re) of 3 nm, and a retardation (Rth) of 40 nm.

Each of the retardations was measured by an automatic birefringence analyzer (KOBRA 21DH manufactured by Oji Scientific Instruments) and calculated.

- Preparation of Coating Solution for Optical Compensation Layer -

Next, 3.8g of a rod-shaped liquid crystal compound expressed by the following Structural Formula (1), 0.06g of a photoinitiator (Irgacure 907 manufactured by Ciba-Geigy K.K), 0.02g of a sensitizer (Kayacure DETX manufactured by Nippon Kayaku Co., Ltd.), and 0.002g of an air-interface vertically aligning agent expressed by the following Structural Formula (2) was dissolved in 9.2g of methyl ethyl ketone to prepare a coating solution.

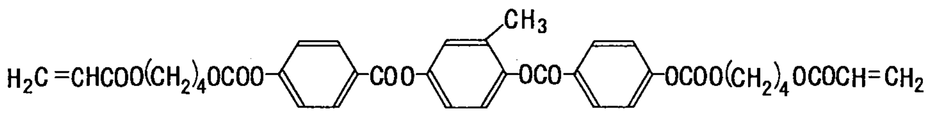

Structural Formula (1)

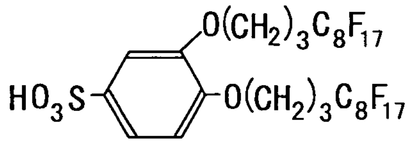

Structural Formula (2)

The obtained coating solution was applied on the side of the alignment film formed on the film by means of a wire bar No. 4.5. This was attached to a metal frame, and heated in a thermostat bath at 100°C for 2 minutes so as to align molecules of the rod-shaped liquid crystal compound. Next, the rod-shaped liquid crystal compound was crosslinked at 80 °C for 20 seconds by UV irradiation using a 120W/cm high-pressure mercury lamp, and then, left standing to cool down to a room temperature to prepare a laminate of an optical compensation layer containing a phase difference layer. It was confirmed that the obtained laminate of the optical compensation layer had a thickness of 65 μm and a retardation (Rth) of -225 nm, and the rod-shaped liquid crystals were substantially vertically aligned.

Each of the retardations was measured and calculated in such a manner that the angle dependency of incident light of the produced film was measured by an automatic birefringence analyzer (KOBRA 21ADH manufactured by Oji Scientific Instruments) and subtracted from the previously measured contribution of the film to obtain the optical property of the optical compensation layer alone.

- Production of Filter for Optical Recording Medium -

First, a base film was prepared by applying polyvinyl alcohol (a trade name of MP203 manufactured by Kuraray Co., Ltd.) to a thickness of 1 μm on a polycarbonate film (a trade name of UPILON manufactured by Mitsubishi Gas Chemical Co., Inc.) having a thickness of 100 μm. A crystal alignment capability was imparted by passing the base film through a rubbing apparatus to rub the surface of the polyvinyl alcohol film.

Subsequently, coating solutions A and B for cholesteric liquid crystal layers having the composition shown in the Table 1 were prepared by a conventional method.

Table 1

| Component (part by mass) | Coating solution for cholesteric liquid crystal layer | |
|---|---|---|
| | A | B |
| UV polymerizable liquid crystal | 93.16 | 94.02 |
| Chiral agent | 6.84 | 5.98 |
| Photopolymerization initiator | 0.1 | 0.1 |
| Sensitizer | 0.02 | 0.02 |
| Solvent | 400 | 400 |

*UV polymerizable liquid crystal: a trade name of PALIOCOLOR LC242 manufactured by BASF
*Chiral agent: a trade name of PALIOCOLOR LC756 manufactured by BASF
*Photopolymerization initiator: a trade name of IRGACURE 369 manufactured by Ciba Specialty Chemicals K.K.
*Sensitizer: diethyl thioxanthone
*Solvent: methyl ethyl ketone (MEK)

Subsequently, the coating solution A for the cholesteric liquid crystal layer was applied onto the base film using a bar coater, dried and then matured at 110°C for 20 seconds for alignment. Then, a cured cholesteric liquid crystal layer A having a thickness of 2 μm was formed by exposing with irradiation energy of 500 $mJ/cm^2$ at 110°C using an ultrahigh pressure mercury lamp.

Subsequently, the coating solution B for the cholesteric liquid crystal layer was applied onto the cholesteric liquid crystal layer A using a bar coater, dried and then matured at 110°C for 20 seconds for alignment. Then, a cured cholesteric liquid crystal layer B having a thickness of 2 μm was formed by exposing with the irradiation energy of 500 $mJ/cm^2$ at 110°C using the ultrahigh pressure mercury lamp.

Further, the obtained laminate of the optical compensation layer was bonded to the cholesteric liquid crystal layer B, with its base film surface not being in contact with the cholesteric liquid crystal layer B. The bonding was performed with an ultraviolet curing resin and an tackiness agent while avoiding inclusion of air bubbles.

Thus, the filter for optical recording medium containing the optical compensation layer correcting negative birefringence, the cholesteric liquid crystal layers A and B having a circularly-polarized-light-separating property, different selective reflection center wavelengths and the same rotation direction of the helix was produced.

- Evaluation of Light Reflection Property -

For each of the obtained filter for optical recording medium, a light reflection property was measured using a spectrum reflection measurement apparatus (L-5662 manufactured by Hamamatsu Photonics K.K. as a light source and PMA-11 manufactured by Hamamatsu Photonics K.K. as a photo multichannel analyzer).

As a result, it was observed that the filter for optical recording medium in Example 1 could reflect 40% or more of the light having a wavelength of 532 nm which was the selective wavelength for the light at an angle of incidence within ±20°. The results are shown in Table 3.

(Example 2)

- Production of Filter for Optical Recording Medium -

A filter for optical recording medium in Example 2 was produced in the same manner as in Example 1, except

that the optical compensation layer having the retardation (Rth) of -225 nm in Example 1 was changed to the retardation (Rth) of -300nm.

(Example 3)

- Production of Filter for Optical Recording Medium -

A filter for optical recording medium in Example 3 was produced in the same manner as in Example 1, except that the optical compensation layer having the retardation (Rth) of -225 nm in Example 1 was changed to a retardation (Rth) of -400nm.

(Example 4)

- Production of Filter for Optical Recording Medium -

A filter for optical recording medium in Example 4 was produced in the same manner as in Example 1, except that the optical compensation layer having the retardation (Rth) of -225 nm in Example 1 was changed to a retardation (Rth) of -450nm.

(Example 5)

- Production of Filter for Optical Recording Medium -

A filter for optical recording medium in Example 5 was produced in the same manner as in Example 1, except that the optical compensation layer having the retardation (Rth) of -225 nm in Example 1 was changed to a retardation (Rth) of -600nm.

(Example 6)

- Production of Filter for Optical Recording Medium -

A filter for optical recording medium in Example 6 was produced in the same manner as in Example 1, except that the optical compensation layer having the retardation (Rth) of -225 nm in Example 1 was changed to a retardation (Rth) of -150nm.

(Example 7)

- Production of Filter for Optical Recording Medium -

A filter for optical recording medium in Example 7 was produced in the same manner as in Example 1, except that the optical compensation layer having the retardation (Rth) of -225 nm in Example 1 was changed to a retardation (Rth) of -80nm.

(Example 8)

- Production of Filter for Optical Recording Medium -

A filter for optical recording medium in Example 6 was produced in the same manner as in Example 1, except that the optical compensation layer having the retardation (Rth) of -225 nm in Example 1 was changed to a retardation (Rth) of -40nm.

(Example 9)

- Production of Filter for Optical Recording Medium -

A filter for optical recording medium containing cholesteric liquid crystal layers A, B and C was produced in the same manner as in Example 1, except that the composition of the coating solutions for the cholesteric liquid crystal layers A, B and C as shown in Table 2 were prepared by conventional means, a cured cholesteric liquid crystal layer

film C of 2 μm thick was formed on the cured cholesteric liquid crystal layer film B, and then the obtained laminate of the optical compensation layer was bonded to the cholesteric liquid crystal layer C, with its base film surface being not in contact with the cholesteric liquid crystal layer C.

Table 2

| Component (part by mass) | Coating solution for cholesteric liquid crystal layer | | |
|---|---|---|---|
| | A | B | C |
| UV polymerizable liquid crystal | 93.16 | 94.02 | 94.74 |
| Chiral agent | 6.84 | 5.98 | 5.26 |
| Photopolymerization initiator | 0.10 | 0.10 | 0.10 |
| Sensitizer | 0.02 | 0.02 | 0.02 |
| Solvent | 400 | 400 | 400 |
| *UV polymerizable liquid crystal: a trade name of PALIOCOLOR LC242 manufactured by BASF<br>*Chiral agent: a trade name of PALIOCOLOR LC756 manufactured by BASF<br>*Photopolymerization initiator: a trade name of IRGACURE 369 manufactured by Ciba Specialty Chemicals K.K.<br>*Sensitizer: diethyl thioxanthone<br>*Solvent: methyl ethyl ketone (MEK) | | | |

(Example 10)

- Production of Filter for Optical Recording Medium -

A filter for optical recording medium in Example 10 was produced in the same manner as in Example 1, except that the optical compensation layer having the retardation (Rth) of -225 nm in Example 9 was changed to a retardation (Rth) of -300nm.

(Example 11)

- Production of Filter for Optical Recording Medium -

A filter for optical recording medium in Example 11 was produced in the same manner as in Example 1, except that the optical compensation layer having the retardation (Rth) of -225 nm in Example 9 was changed to a retardation (Rth) of -400nm.

(Example 12)

- Production of Filter for Optical Recording Medium -

A filter for optical recording medium in Example 12 was produced in the same manner as in Example 1, except that the optical compensation layer having the retardation (Rth) of -225 nm in Example 9 was changed to a retardation (Rth) of -450nm.

(Example 13)

- Production of Filter for Optical Recording Medium -

A filter for optical recording medium in Example 13 was produced in the same manner as in Example 1, except that the optical compensation layer having the retardation (Rth) of -225 nm Example 9 was changed to a retardation (Rth) of - 600nm.

(Example 14)

- Production of Filter for Optical Recording Medium -

A filter for optical recording medium in Example 14 was produced in the same manner as in Example 1, except that the optical compensation layer having the retardation (Rth) of -225 nm in Example 9 was changed to a retardation (Rth) of -150nm.

(Example 15)

- Production of Filter for Optical Recording Medium -

A filter for optical recording medium in Example 15 was produced in the same manner as in Example 1, except that the optical compensation layer having the retardation (Rth) of -225 nm in Example 9 was changed to a retardation (Rth) of -80nm.

(Example 16)

- Production of Filter for Optical Recording Medium -

A filter for optical recording medium in Example 16 was produced in the same manner as in Example 1, except that the optical compensation layer having the retardation (Rth) of -225 nm in Example 9 was changed to a retardation (Rth) of -40nm.

(Comparative Example 1)

- Production of Filter for Optical Recording Medium -

A filter for optical recording medium in Comparative Example 1 was produced in the same manner as in Example 1, except that the optical compensation layer in Example 1 was not formed.

(Comparative Example 2)

- Production of Filter for Optical Recording Medium -

A filter for optical recording medium in Comparative Example 2 was produced in the same manner as in Example 1, except that optical compensation layer in Example 9 was not formed.

(Example 1A)

- Production of Optical Recording Medium -

A commonly used substrate made from a polycarbonate resin having a diameter of 120 mm and a plate thickness of 0.6 mm used for DVD+RW was used as a second substrate. On the entire surface of this substrate, a servo pit pattern was formed, and the servo pit pattern had a track pitch of 0.74 μm, a groove depth of 175 nm and a groove width of 300 nm.
First, a reflective film was formed on the servo pit pattern surface formed on the second substrate. Aluminum (Al) was used for the material of the reflective film. The Al reflective film having a thickness of 200 nm was formed by a DC magnetron sputtering method.
Subsequently, the filter for optical recording medium produced in Example 1 was punched out into a given disc size so as to be disposed on the substrate, and the disc size filter was bonded to the substrate such that the base film surface thereof is made contact with the servo pit pattern of the substrate. The disc size filter was bonded to the substrate using an ultraviolet curable resin and a tackiness agent while avoiding inclusion of air bubbles. By the procedure described above, a filter layer was formed.
The optical compensation layer produced in Example 1 was bonded to the obtained film layer, with its base film surface not being in contact with the filter layer. The bonding was performed with an ultraviolet curable resin and a tackiness agent while avoiding inclusion of air bubbles.
Subsequently, as a recording layer material, a photopolymer coating solution having the following composition was prepared.

< Composition of photopolymer coating solution >

| | |
|---|---|
| Di(urethane acrylate) oligomer (ALU-351 manufactured by Echo Resins) | 59 parts by mass |
| Isobornyl acrylate | 30 parts by mass |
| Vinyl benzoate | 10 parts by mass |
| Polymerization initiator (IRGACURE 784 manufactured by Ciba Specialty Chemicals) | 1 part by mass |

The obtained photopolymer coating solution was placed on the optical compensation layer using a dispenser. The disc was bonded at its end to a first substrate having a diameter of 12 cm and a thickness of 0.6 mm made from a polycarbonate resin with an adhesive while pressing the first substrate on the photopolymer. The disc end was provided with a flange section so as to be the photopolymer layer of 500 μm-thick. The thickness of the photopolymer layer can be determined by bonding the first substrate to the disc end, and the excessively applied photopolymer overflowed and was removed. By the procedure described above, an optical recording medium of Example 1A was produced. FIG. 7 is a schematic sectional view showing an embodiment of a configuration similar to the Example 1A.

(Example 2A) to (Example 16A) and (Comparative Example 1A) to (Comparative Example 2A)

In Example 2A, the filter for optical recording medium obtained in Example 2 was used as a filter for optical recording medium, and in Example 3A, the filter for optical recording medium obtained in Example 3 was used as a filter for optical recording medium. In Examples 4A to 16A, and Comparative Examples 1A to 2A, each optical recording medium was produced in the same manner.

<Performance Evaluation>

Next, for each of the optical recording media obtained in Examples 1A to 16A and Comparative Examples 1A to 2A, the distortion in the reproduced image was visually observed by setting each of the optical recording media in an optical recording and reproducing apparatus as shown in FIG. 9 and actually recording and reproducing information, and then evaluated on the following criteria.

Results are shown in Table 3.

I ................ No distortion is observed in a reproduced image.
II ................ Slight distortion is observed in a part of a reproduced image.
III ................ Distortion is observed in a part of a reproduced image.

Table 3

| | Optical Compensation Layer | | Filter Layer | | | Optical Recording Medium | |
|---|---|---|---|---|---|---|---|
| | Retardation Rth (nm) | Thickness ($\mu$m) | Cholesteric Liquid Crystal Layer | Angle of Incidence of Light | Light Reflection Property | | Distortion in Reproduced Image |
| Example 1 | -225 | 65 | A, B | ±20° | 40% or more | Example 1A | I |
| Example 2 | -300 | 67 | A, B | ±20° | 40% or more | Example 2A | I |
| Example 3 | -400 | 69 | A, B | ±20° | 40% or more | Example 3A | I |
| Example 4 | -450 | 70 | A, B | ±20° | 40% or more | Example 4A | II |
| Example 5 | -600 | 76 | A, B | ±20° | 40% or more | Example 5A | II |
| Example 6 | -150 | 63 | A, B | ±20° | 40% or more | Example 6A | I |
| Example 7 | -80 | 62 | A, B | ±20° | 40% or more | Example 7A | I |
| Example 8 | -40 | 61 | A, B | ±20° | 40% or more | Example 8A | II |
| Example 9 | -225 | 65 | A, B, C | ±40° | 40% or more | Example 9A | I |
| Example 10 | -300 | 67 | A, B, C | ±40° | 40% or more | Example 10A | I |
| Example 11 | -400 | 69 | A, B, C | ±40° | 40% or more | Example 11A | I |
| Example 12 | -450 | 70 | A, B, C | ±40° | 40% or more | Example 12A | II |
| Example 13 | -600 | 76 | A, B, C | ±40° | 40% or more | Example 13A | II |
| Example 14 | -150 | 63 | A, B, C | ±40° | 40% or more | Example 14A | I |
| Example 15 | -80 | 62 | A, B, C | ±40° | 40% or more | Example 15A | I |
| Example 16 | -40 | 61 | A, B, C | ±40° | 40% or more | Example 16A | II |
| Comparative Example 1 | No optical compensation layer | -- | A, B | No reflection obtained due to slight inclination. | | Comparative Example 1A | III |
| Comparative Example 2 | No optical compensation layer | -- | A, B, C | No reflection obtained due to slight inclination. | | Comparative Example 2A | III |

From the results shown in Table 3, in the optical recording media of Examples 1A to 16A, the adjustment of the retardation (Rth) of the optical compensation layer enables to effectively correct the distortion in the reproduced image in the optical recording medium caused by a negative birefringence in the cholesteric liquid crystal layer, and to obtain a reproduced image of high image quality, without distortion, compared to Comparative Examples 1A to 2A.

Industrial Applicability

The filter for optical recording medium of the present invention capable of preventing diffuse reflection of an information beam and a reference beam from a reflective layer in the optical recording medium, and preventing occurrence of noise without causing shift in selective reflection wavelength, and distortion in a reproduced image even when an angle of incidence is changed, can be suitably used as a wavelength selecting reflective film in various holographic optical recording medium capable of recording unprecedentedly high density images.
The optical recording medium of the present invention can prevent occurrence of noise without causing shift in selective reflection wavelength even when an angle of incidence is changed, and can be suitably used as a holographic optical recording medium capable of recording high density images, which has not yet been conventionally achieved.

## Claims

1. An optical recording medium comprising:

    a first substrate,
    a recording layer which records information by utilizing holography,
    an optical compensation layer,
    a filter layer, and
    a second substrate, in this order.

2. The optical recording medium according to Claim 1, wherein the optical compensation layer is a laminate comprising a curable vertically-aligned liquid crystal layer disposed on a support.

3. The optical recording medium according to any of Claims 1 and 2, wherein the optical compensation layer comprises a birefringent polymer film which has any of surface alignment and thickness-direction alignment.

4. The optical recording medium according to any of Claims 1 to 3, wherein the optical compensation layer comprises birefringence slow axis in a thickness direction.

5. The optical recording medium according to any of Claims 1 to 4, wherein the optical compensation layer has a thickness of 0.1μm to 100 μm.

6. The optical recording medium according to any of Claims 1 to 5, wherein the optical compensation layer has a retardation (Rth) of -20 nm to -400 nm, and the retardation (Rth) is expressed by Equation (1):

$$Rth = \{(n_x + n_y)/2 - n_z\} \times d \quad \cdots\cdots\cdots\cdots \text{ Equation (1)}$$

    wherein $n_x$, $n_y$, and $n_z$ respectively represent refractive indices in axial directions of X, Y, and Z which are respectively mutually-perpendicular in the optical compensation layer when the normal direction (the thickness direction) of the optical compensation layer is defined as the Z-axis, and "d" represents a thickness of the optical compensation layer.

7. The optical recording medium according to any of Claims 1 to 6, wherein the filter layer comprises a cholesteric liquid crystal layer, and the cholesteric liquid crystal layer comprises at least a nematic liquid crystal compound and a photoreactive chiral compound.

8. The optical recording medium according to any of Claims 1 to 7, wherein the photoreactive chiral compound comprises a chiral site and a photoreactive group, and the chiral site is at least one selected from an isosorbide compound, an isomannide compound, and a binaphthal compound.

9. The optical recording medium according to any of Claims 1 to 8, wherein the photoreactive group is a group which induces trans-to-cis isomerization about a carbon-carbon double bond by light irradiation.

10. The optical recording medium according to any of Claims 1 to 9, wherein two or more of the cholesteric liquid crystal layers are laminated.

11. The optical recording medium according to Claim 10, wherein each of the cholesteric liquid crystal layers has circularly-polarized-light-separating property.

12. The optical recording medium according to any of Claims 10 to 11, wherein the cholesteric liquid crystal layers have the same rotation direction of the helix.

13. The optical recording medium according to any of Claims 10 to 12, wherein the cholesteric liquid crystal layers have different selective reflection center wavelengths.

14. The optical recording medium according to any of Claims 10 to 13, wherein the selective reflection wavelength bands of the cholesteric liquid crystal layers form a continuous selective reflection wavelength band.

15. The optical recording medium according to any of Claims 1 to 14,
wherein a first light passes through the optical recording medium while a second light which is different from the first light is reflected.

16. The optical recording medium according to any of Claims 1 to 15, wherein the first light has a wavelength of 350 nm to 600 nm, and the second light has a wavelength of 600 nm to 900 nm.

17. The optical recording medium according to any of Claims 1 to 16, wherein a light reflectance at $\lambda_0$ to $\lambda_0/\cos 20°$ is 40% or more, where $\lambda_0$ represents a wavelength of irradiation light.

18. The optical recording medium according to any of Claims 1 to 17, wherein a light reflectance at $\lambda_0$ to $\lambda_0/\cos 40°$ is 40% or more, where $\lambda_0$ represents a wavelength of irradiation light.

19. The optical recording medium according to any of Claims 1 to 18,
wherein the first substrate has a servo pit pattern.

20. The optical recording medium according to Claim 19, wherein the servo pit pattern has a reflective film on a surface thereof.

21. The optical recording medium according to Claim 20, wherein the reflective film is a metallic reflective film.

22. The optical recording medium according to any of Claims 1 to 21, further comprising a first gap layer between the filter layer and the reflective film.

23. The optical recording medium according to any of Claims 1 to 22, further comprising a second gap layer between the recording layer and the filter layer.

24. The optical recording medium according to any of Claims 1 to 23, wherein the filter layer is used as a selectively reflective film in the optical recording medium which records information by utilizing holography.

25. A filter for use in the optical recording medium according to any one of Claims 1 to 24, comprising:

a support,
an optical compensation layer over the support, and
a filter layer over the support.

26. The filter according to Claim 25, wherein the filter is used as a selectively reflective film of the optical recording medium which records information by utilizing holography.

27. The filter according to any of Claims 25 and 26, wherein information is recorded in a recording layer by means of

an interference pattern which is formed by interference between an information beam and a reference beam, and the information beam and the reference beam are applied onto an optical recording medium in such a way that the optical axis of the information beam is collinear with that of the reference beam.

**28.** A method for producing an optical recording medium, comprising:

disposing a cholesteric liquid crystal layer on a second substrate to form a filter layer, and
disposing an optical compensation layer on the cholesteric liquid crystal layer,

wherein the optical recording medium is the optical recording medium according to any of Claims 1 to 24.

**29.** The method for producing an optical recording medium according to Claim 28, comprising disposing two or more cholesteric liquid crystal layers to form the filter layer.

**30.** An optical recording method comprising:

applying an information beam and a reference beam onto the optical recording medium according to any of Claims 1 to 24 in such a way that the optical axis of the information beam is collinear with that of the reference beam, and
recording information in a recording layer by means of an interference pattern, which is formed by interference between the information beam and the reference beam.

**31.** An optical reproducing method comprising: applying a reference beam to an interference pattern recorded in a recording layer by the optical recording method according to Claim 30 so as to reproduce a recorded information.

**32.** The optical reproducing method according to Claim 31, comprising applying the reference beam to the interference pattern at the same angle as the reference beam used for recording the optical recording medium so as to reproduce the recorded information.

FIG. 1

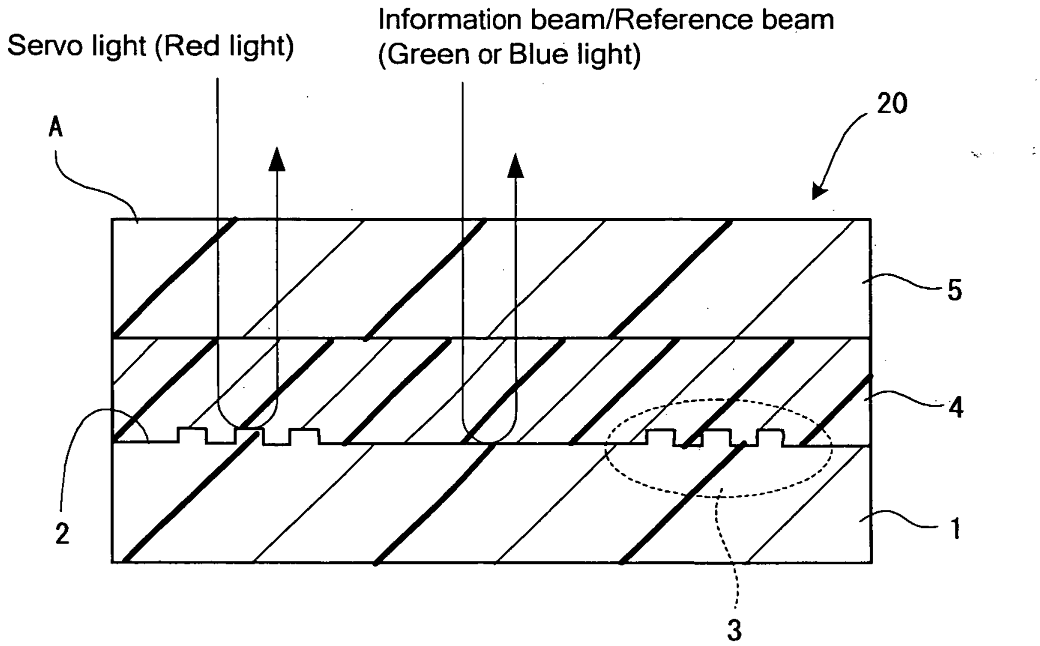
Servo light (Red light)
Information beam/Reference beam
(Green or Blue light)
20
A
5
4
2
1
3

FIG. 2

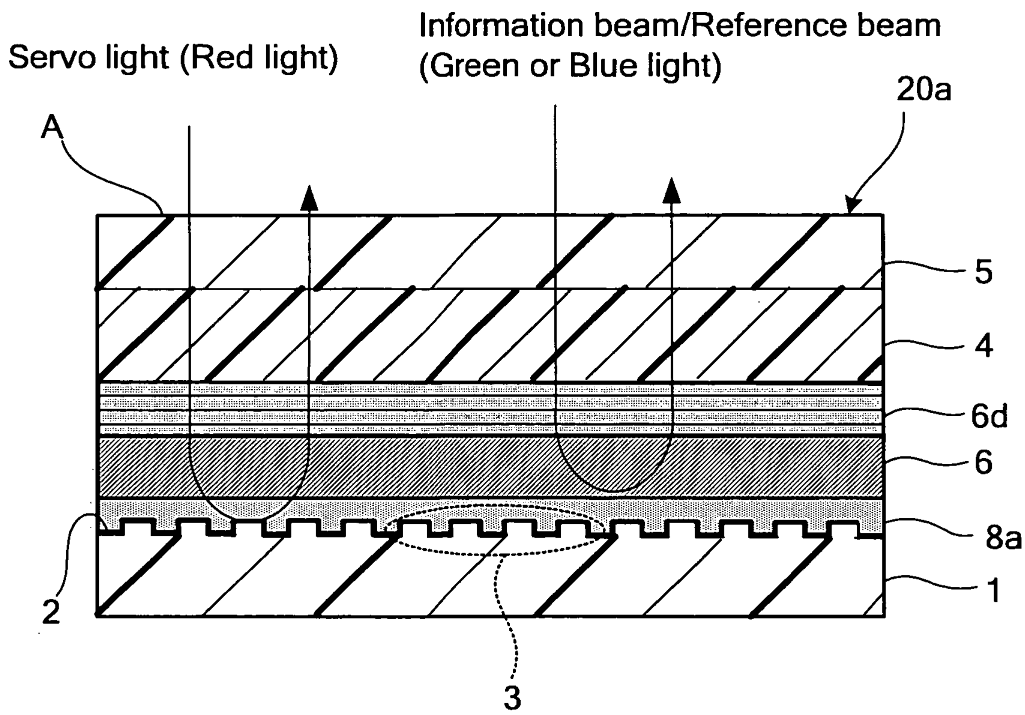
Servo light (Red light)
Information beam/Reference beam
(Green or Blue light)
20a
A
5
4
6d
6
8a
2
1
3

FIG. 3

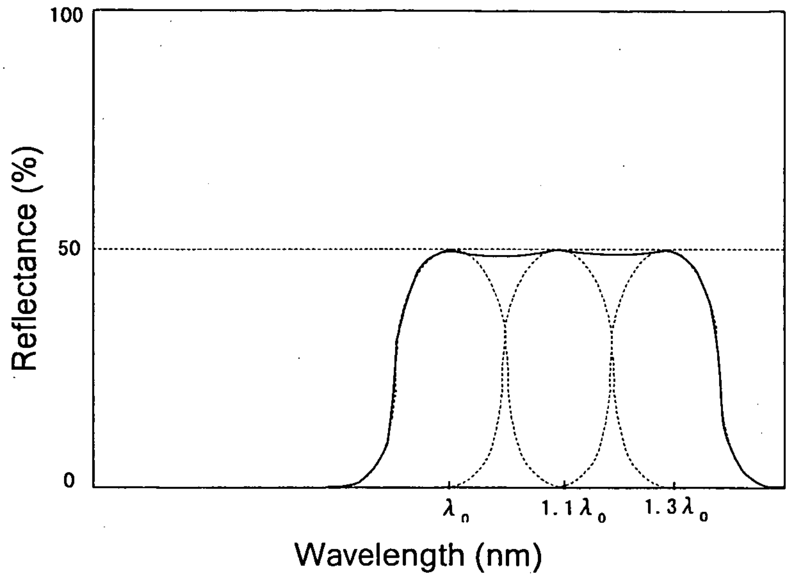
100
50
0
Reflectance (%)
λ0
1.1λ0
1.3λ0
Wavelength (nm)

FIG. 4

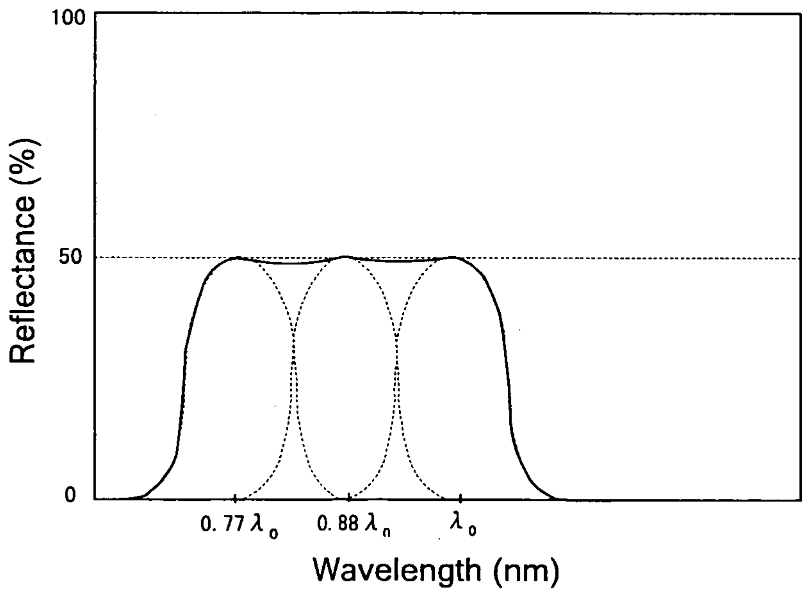
100
50
0
Reflectance (%)
0.77λ0
0.88λ0
λ0
Wavelength (nm)

FIG. 5

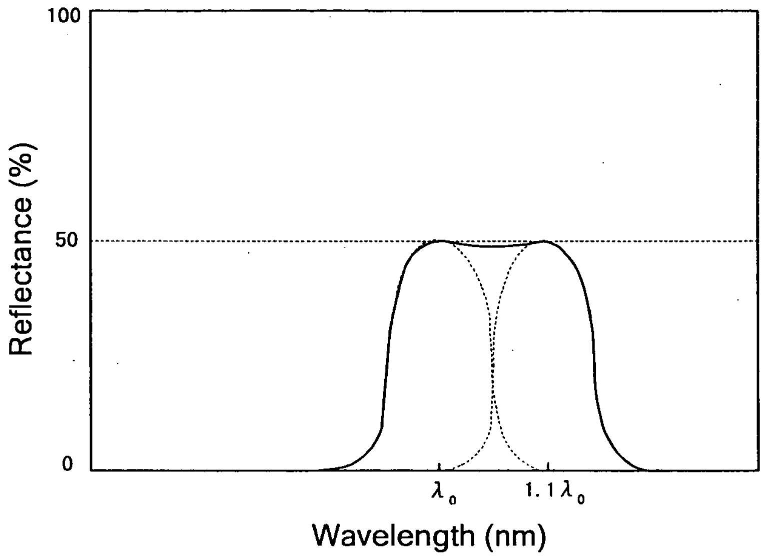
100
50
0
Reflectance (%)
$\lambda_0$
$1.1\lambda_0$
Wavelength (nm)

FIG. 6

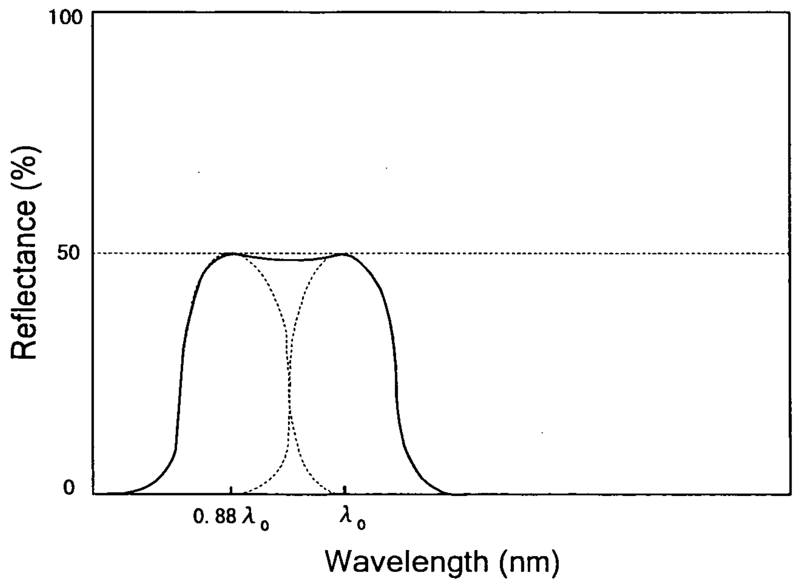
100
50
0
Reflectance (%)
$0.88\lambda_0$
$\lambda_0$
Wavelength (nm)

FIG. 7

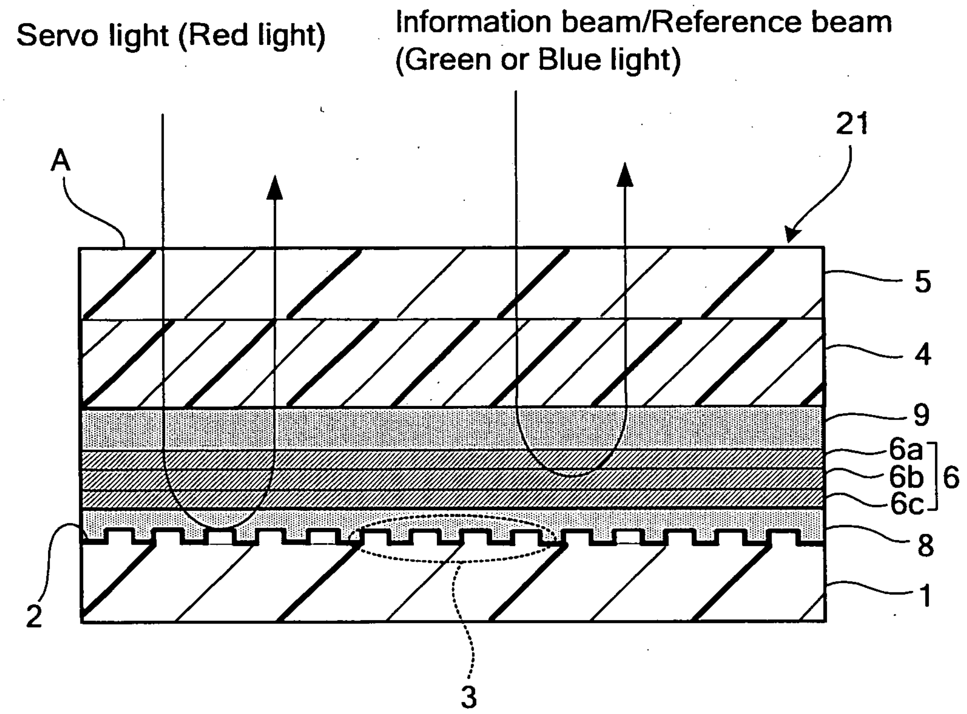
Servo light (Red light)
Information beam/Reference beam
(Green or Blue light)
21
A
5
4
9
6a
6b
6
6c
8
1
2
3

FIG. 8

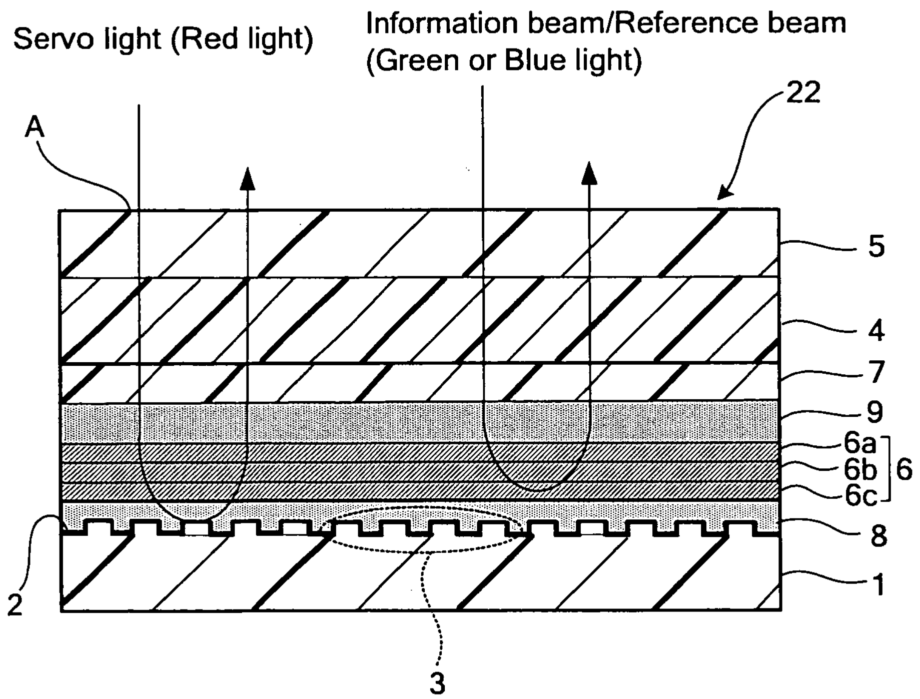
Servo light (Red light)
Information beam/Reference beam
(Green or Blue light)
22
A
5
4
7
9
6a
6b
6
6c
8
1
2
3

FIG. 9

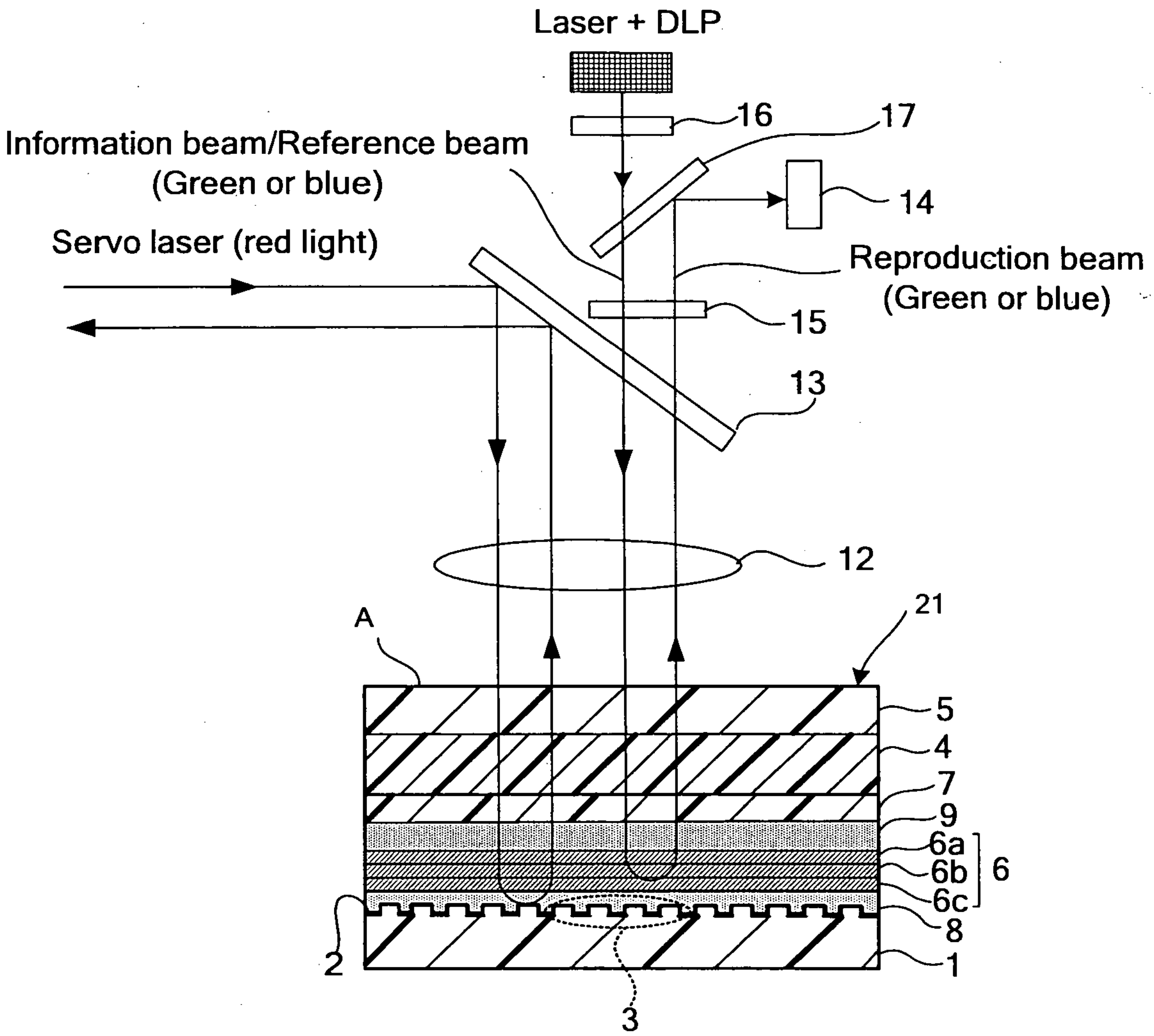
Laser + DLP
16
17
Information beam/Reference beam
(Green or blue)
14
Servo laser (red light)
Reproduction beam
(Green or blue)
15
13
12
A
21
5
4
7
9
6a
6b
6
6c
8
2
1
3

FIG. 10

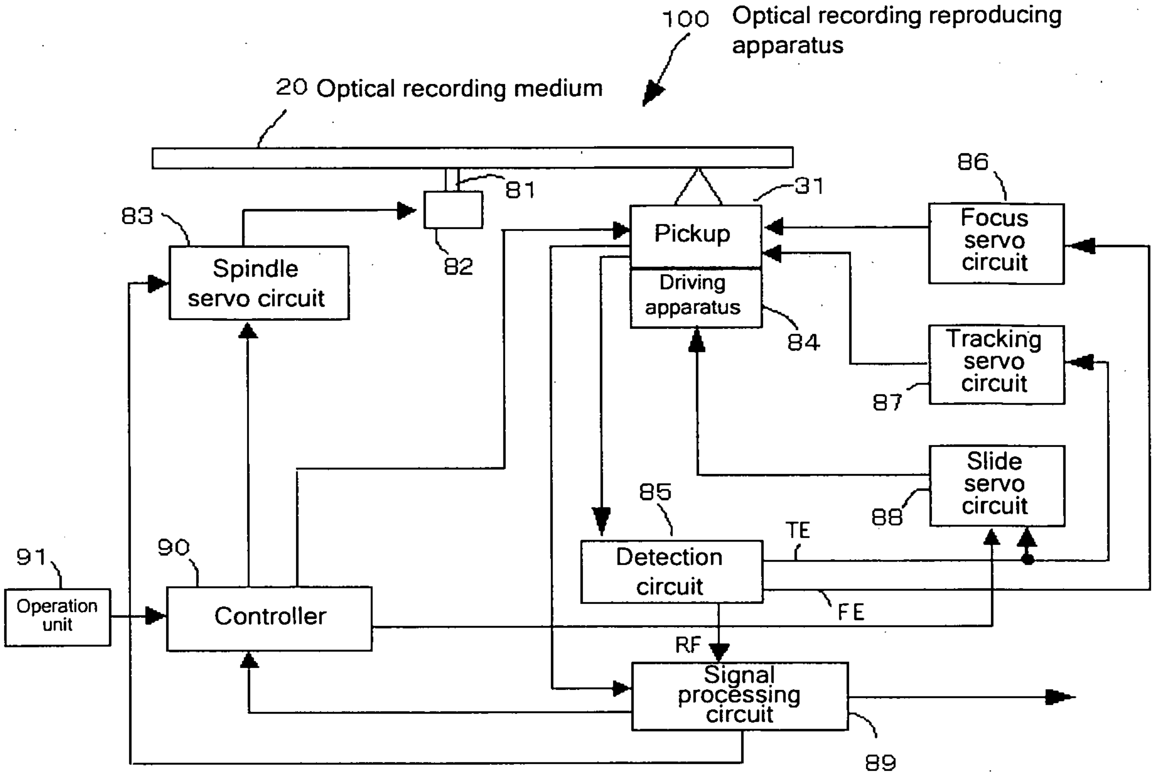
100 Optical recording reproducing apparatus
20 Optical recording medium
81
82
83
Spindle servo circuit
31
Pickup
Driving apparatus
84
86
Focus servo circuit
Tracking servo circuit
87
Slide servo circuit
88
85
Detection circuit
TE
FE
RF
91
Operation unit
90
Controller
Signal processing circuit
89

## INTERNATIONAL SEARCH REPORT

International application No.
PCT/JP2006/301722

A. CLASSIFICATION OF SUBJECT MATTER
*G03H1/02*(2006.01), *G11B7/0065*(2006.01), *G11B7/135*(2006.01), *G11B7/24* (2006.01), *G11B7/241*(2006.01)

According to International Patent Classification (IPC) or to both national classification and IPC

B. FIELDS SEARCHED

Minimum documentation searched (classification system followed by classification symbols)
*G03H1/02*(2006.01), *G11B7/0065*(2006.01), *G11B7/135*(2006.01), *G11B7/24* (2006.01), *G11B7/241*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-265472 A (Optware Corp.), 24 September, 2004 (24.09.04), Par. Nos. [0013] to [0030]; Figs. 2 to 6 & WO 04/070714 A1 | 1-32 |
| A | JP 2003-307622 A (Dainippon Printing Co., Ltd.), 31 October, 2003 (31.10.03), Par. Nos. [0029] to [0032] (Family: none) | 1-32 |
| P,A | JP 2005-292766 A (Kabushiki Kaisha Samsung Yokohama Kenkyusho), 20 October, 2005 (20.10.05), Par. Nos. [0035] to [0064] (Family: none) | 1-32 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 March, 2006 (24.03.06) | 04 April, 2006 (04.04.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/301722

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-133318 A (Nippon Zeon Co., Ltd.), 30 April, 2004 (30.04.04), Claim 2 (Family: none) | 6 |
| A | JP 2001-318234 A (Dainippon Printing Co., Ltd.), 16 November, 2001 (16.11.01), Par. Nos. [0022] to [0026] (Family: none) | 10-14,28,29 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002123949 A
- JP 11311936 A
- JP 2004265472 A
- JP 2001091746 A
- JP 6331826 A
- JP 2853064 B
- JP 2000155216 A
- JP 2002062426 A
- US 2367661 A
- US 2367670 A
- US 2448828 A
- US 2722512 A
- US 3046127 A
- US 2951758 A
- US 3549367 A
- JP 60105667 A
- US 4239850 A
- US 4212970 A
- JP 2002020363 A
- JP 2002129162 A
- JP 2002212100 A
- JP 2002262239 A
- JP 2003091752 A
- JP 2003119959 A
- JP 2003330303 A
- JP 2004003804 A
- JP 2002296423 A
- JP 2001330725 A
- JP 2003295212 A
- US 5759721 A
- US 4942112 A
- US 4959284 A
- US 6221536 B
- WO 9744714 A
- WO 9713183 A
- WO 9926112 A
- JP 2880342 B
- JP 2873126 B
- JP 2849021 B
- JP 3057082 B
- JP 3161230 B
- JP 2001316416 A
- JP 2000275859 A

### Non-patent literature cited in the description

- Photopolymer Handbook. Kogyo Chosakai Publishing Co., Ltd, 1989
- Photopolymer Technology. Nikkan Kogyo Shinbun, 1989
- *SPIE Proceedings,* 1997, vol. 3010, 354-372
- *SPIE Proceedings,* 1998, vol. 3291, 89-103